(19) Europäisches Patentamt / European Patent Office / Office européen des brevets

(11) **EP 1 967 359 A2**

(12) **EUROPEAN PATENT APPLICATION**

(43) Date of publication:
**10.09.2008 Bulletin 2008/37**

(51) Int Cl.:
***B32B 27/00*** *(2006.01)*

(21) Application number: **08002619.8**

(22) Date of filing: **13.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.02.2007 JP 2007035505**

(71) Applicant: **JSP CORPORATION**
**Tokyo 100-0005 (JP)**

(72) Inventors:
 • **Morita, Kazuhiko**
  **Kanuma-shi**
  **Tochigi 322-0014 (JP)**

• **Iwasaki, Satoshi**
 **Kanuma-shi**
 **Tochigi 322-8511 (JP)**
• **Goto, Ken-ichi**
 **Kanuma-shi**
 **Tochigi 322-0014 (JP)**

(74) Representative: **Müller-Gerbes, Margot**
 **Müller-Gerbes Wagner Albiger**
 **Patentanwälte**
 **Friedrich-Breuer-Strasse 72-78**
 **53225 Bonn (DE)**

(54) **Antistatic multilayer sheet and production method thereof**

(57)    The present invention provides a transparency antistatic multilayer sheet prepared by extrusion sheet molding that is favorable in appearance and retains its antistatic action consistently, and a production method of producing a thick antistatic multilayer sheet reliably by extrusion sheet molding, while preventing generation of contamination of the polishing roll surface and also damage of the sheet appearance. Specifically, it relates to an antistatic multilayer sheet, comprising coat layers constituted of a transparent resin A, said coat layers substantively do not contain a polymeric antistatic agent, and at least one antistatic layer constituted of a transparent resin B and a polymeric antistatic agent, wherein the antistatic layer is in contact with the inside of the coat layer and the coat layers are placed on the outermost faces of the multilayer sheet, wherein the multilayer sheet has a distinctness of image of 60% or higher and an initial electrostatic potential in electrostatic half-life measurement of 2.5 kV or lower, and a production method thereof.

**FIG. 1A**

EP 1 967 359 A2

FIG. 1B

## EP 1 967 359 A2

**Description**

BACKGROUND OF THE INVENTION

1. Field of the Invention

The present invention relates to a transparent multilayer sheet having persistent antistatic property, more specifically, an antistatic multilayer coextrusion sheet, comprising coat layers cnsistuted of a transparent resin A, said coat layers substantively do not contain a polymeric antistatic agent and at least one antistatic layer constituted of a transparent resin B and a polymeric antistatic agent wherein the antistatic layer is in contact with the inside of the coat layer and the coat layers are placed on the outermost faces of the multilayer sheet, wherein the multilayer sheet has a distinctness of image of 60% or higher and an initial electrostatic potential in electrostatic half-life measurement of 2.5 kV or lower. The antistatic multilayer sheet according to the present invention is an antistatic multilayer sheet favorable as an antistatic material for use, for example, as various components in illumination apparatuses, instrument nameplates, electronic products, electronic home appliances, OA devices, and others, signboards, displays, and front plates of various instruments.

2. Description of the Related Art

Conventionally, highly transparent resins such as acrylic resins, which have superior transparency, weather resistance and rigidity, have been used widely, for example, as materials for electronic products, electronic home appliances and OA devices, signboards, decoration parts, displays, and front faces of various instruments.

However disadvantageously, synthetic resin products generally develop electrostatic charge easily for example by friction, causing deposition of dirt sand dusts and deterioration in appearance or static electricity-derived troubles in electronic devices. Accordingly, there exists a need for a highly transparent resin sheet that is improved in its antistatic property while its favorable transparency is retained.

Generally, for providing a synthetic resin sheet with antistatic property, known is a method of blending a surfactant into a base resin or coating a surfactant on the product sheet surface. However, in the method of using a surfactant as an antistatic agent, the antistatic agent is easily removed by water washing or friction, and thus, it was impossible to provide it with persistent antistatic property.

On the other hand, for providing a synthetic resin sheet with persistent antistatic property, known is a method of adding a polymeric antistatic agent to the base resin and thus, adding an antistatic agent into the product sheet. Examples of the polymeric antistatic agents practically commercialized include polyethylene glycol-methacrylate copolymers, polyether ester amides, polyether amide imides, and polyethyleneoxide-epichlorohydrin copolymers.

It is possible to prevent the disappearance of antistatic effect often found when a surfactant is used, by using such a polymeric antistatic agent. However, disadvantageously when a sheet-shaped article is produced continuously by extrusion sheet-molding method by using a polymeric antistatic agent, the polishing roll surface is contaminated with the polymeric antistatic agent, often leading to deterioration in the surface state of product sheets. The "extrusion sheet molding" is a method of extruding a molten resin through a slit of flat die (T die) placed in the extruder outlet region, withdrawing the sheet with a withdrawing roll (polishing roll, etc.) installed at a position downstream side of the die, and thus, molding it into a sheet. Normally, a hard chrome-plated mirror surface-finished smooth-surfaced metal roll is used as the polishing roll.

Japanese Patent Application Laid-Open (JP-A) No. 7-1682 discloses, as such a sheet using a polymeric antistatic agent, an antistatic multilayer sheet consisting of a multilayer sheet of a base acrylic resin layer and a polymeric antistatic agent-containing resin layer layered at least on one side thereof and additionally an acrylic resin and/or vinylidene fluoride resin layer layered thereon by lamination or coating. However, JP-A NO. 7-1682, does not mention anything about contamination of the polishing roll surface and its associated deterioration in the surface state of the product sheet that may occur when sheet products are produced continuously by using a polymeric antistatic agent by the extrusion sheet-molding method.

JP-A NO. 8-80599 discloses that it is possible to overcome the problem of the contamination of the roll surface by a polymeric antistatic agent and the resulting deterioration in the surface state of the product, by controlling the roll temperature to a relatively low temperature of 50 to 80°C. However, if a thick sheet is produced at such a low roll temperature, the sheet obtained easily cause warping and often does not have a smooth surface.

It is necessary to raise the roll temperature to produce a surface-smooth warp-resistant sheet. However, increase in roll temperature leads to easier roll contamination, demanding operation to remove the contamination of the roll surface or to exchange the roll and prohibiting stabilized production continuously for a long period of time, consequently causing problems of low productivity and also of increase in cost.

Alternatively, JP-A NO. 2006-206894 proposes a polymeric antistatic agent resistant to roll contamination, and discloses that it is possible to obtain a product favorable in surface state by using such a polymeric antistatic agent. However, in JP-A NO. 2006-206894 above, the roll contamination is evaluated when a thin film, for example having a thickness of 200 $\mu$m, is withdrawn with a roll thermally adjusted to a temperature of 20°C, and thus, it does not mention anything about contamination of polishing rolls when a sheet, which is thicker than film, is produced by extrusion sheet molding. By using the polymeric antistatic agent, it is not possible to prevent roll contamination sufficiently when a sheet is produced at a relatively high roll temperature by the extrusion sheet molding, and the problem remains sufficiently undissolved so far.

Alternatively, JP-A NO. 2006-15741 disclosed a multilayered film employing a polymeric antistatic agent, that is resistant to fluctuation in surface property, elute a smaller amount of ionic impurities, and causes less contamination of wrapped materials. However, JP-A NO. 2006-15741 is related to a multilayered film for packaging produced by casting or inflation, and does not mention anything about contamination of the polishing roll during production of a multilayer sheet by extrusion sheet molding or the resulting deterioration in the surface state of product sheet. Accordingly, it is still not possible currently to produce a transparent favorably-surfaced sheet, especially a thick sheet, sheet by extrusion sheet-molding method, by using a polymeric antistatic agent.

The roll contamination during extrusion sheet molding for a sheet having coat layers containing a polymeric antistatic agent is considered to be based on the properties inherent to the polymeric antistatic agent used. In other words, the polymeric antistatic agent is a copolymer having hydrophilic polymer units and oleophilic polymer units, to raise the compatibility with thermoplastic resins for providing the mixed thermoplastic resin with antistatic property. In addition, an alkali-metal salt is introduced into the copolymer for endowment of ion conductivity. Polymeric antistatic agents with such properties are inevitably highly polarized. In addition, such a polymeric antistatic agent often contains a low-molecular weight organic matter for improvement in antistatic effect, and thus, had a fundamental problem that the low-molecular weight organic matter deposits easily on the hard chrome plated polishing roll surface heated to 60 to 180°C during ordinary extrusion sheet molding.

Thus, the inventors studied a method of coextruding a transparent resin layer containing no polymeric antistatic agent on both faces of a resin composition layer containing an added polymeric antistatic agent in a transparent resin, for prevention of roll contamination. As a result, such a molded product was shown to be resistant to roll contamination for an extended period of time. However, multilayer lamination by the coextrusion method caused another problem that a scaly pattern is generated at the interface of the coat layer and the antistatic layer in the multilayer sheet obtained. The multilayer sheet carrying a scaly pattern generated at the interface was superior in antistatic property and also in transparency, but significantly unfavorable in appearance and lower in distinctness of image.

Accordingly, an object of the present invention is to provide a transparency antistatic multilayer sheet prepared by extrusion sheet molding that is favorable in appearance and retains its antistatic action consistently, and a molded article thereof.

Another object of the present invention is to provide a production method of producing a thick antistatic multilayer sheet reliably by extrusion sheet molding, while preventing generation of contamination of the polishing roll surface and also of a scaly pattern on the sheet, which damages the sheet appearance.

In the present invention, the "transparent multilayer sheet that is favorable in appearance and retains its antistatic action consistently" may be referred to as a "transparent antistatic multilayer sheet, "an " antistatic multilayer sheet, " or simply a "multilayer sheet". In addition, the "polymeric antistatic agent" may be referred to simply as an "antistatic agent"; and the "polymeric antistatic agent-containing layer" simply as an "antistatic layer".

SUMMARY OF THE INVENTION

After intensive studies on extrusion sheet molding of resin compositions containing a polymeric antistatic agent, the inventors have found a favorable production method of producing a transparent antistatic multilayer sheet with a favorable appearance that retains its superior antistatic property consistently and that it was possible to achieve the object above by the method, and made the present invention.

The present invention relates to a multilayer sheet favorable in transparency and appearance that retains its favorable antistatic property consistently (first aspect of the present invention) and a molded article prepared by thermoforming of the multilayer sheet according to the present invention.

It also relates to a production method of producing the multilayer sheet according to the present invention (second aspect of the present invention).

Namely, the first aspect of the present invention relates to:

(1) An antistatic multilayer sheet, comprising coat layers constituted of a transparent resin A, said coat layers substantively do not contain substantively a polymeric antistatic agent, and at least one antistatic layer constituted of a transparent resin B and a polymeric antistatic agent, wherein the antistatic layer is in contact with the inside of the coat layer and the coat layers are placed on the outermost faces of the multilayer sheet, wherein the multilayer sheet has a distinctness of image of 60% or higher and an initial electrostatic potential in electrostatic half-life measurement of 2.5 kV or lower;

(2) The antistatic multilayer sheet described in (1) above, wherein the electrostatic half-life of the multilayer sheet is 60 seconds or less;

(3) The antistatic multilayer sheet described in (1) above, wherein the electrostatic half-life of the multilayer sheet is 20 seconds or less;

(4) The antistatic multilayer sheet described in (1) above, wherein the antistatic layers are formed on both faces of a core layer constituted of a transparent resin C;

(5) The antistatic multilayer sheet described in (4) above, wherein the amount of the polymeric antistatic agent added to the antistatic layer is 5 to 35 wt% with respect to the total weight of the polymeric antistatic agent and the transparent resin B, and 9 wt% or lower with respect to the total weight of the entire multilayer sheet;

(6) The antistatic multilayer sheet described in any one of (1) to (5) above, wherein the transparent resin A, B and/or C is one or two or more kinds of resins selected from acrylic resins, styrene resins, polycarbonate resins, thermoplastic polyester resins and cyclic olefinic resins;

(7) The antistatic multilayer sheet described in any one of (1) to (5) above, wherein the transparent resins A, B and C are an acrylic resin;

(8) The antistatic multilayer sheet described in (7) above, wherein the acrylic resin is polymethyl methacrylate,methyl methacrylate-styrene-butylene copolymer or methyl methacrylate-styrene copolymer;

(9) The antistatic multilayer sheet described in (1) above, wherein the difference in refractive index between the transparent resins constituting respective layers of the multilayer sheet is 0.05 or less;

(10) The antistaticmultilayer sheet described in (1) above, wherein the difference in refractive index between polymeric antistatic agent and the base transparent resin is 0.05 or less;

(11) The antistaticmultilayer sheet described in (1) above, wherein the total light transmittance of the multilayer sheet is 75% or higher; and

(12) The antistatic multilayer sheet described in (1) above, wherein a colorant is added to any one of the layers constituting the multilayer sheet.

The second aspect of the present invention relates to:

(13) A method of producing the antistatic multilayer sheet according to Claim 1, comprising coextruding a molten resin composition constitutedof a transparent resin, saidmolten resin composition substantively do not contain a polymeric antistatic agent, and a molten resin composition constituted of a transparent resin and a polymeric antistatic agent while adjusting the shear amount in the die-lip parallel land area, as calculated according to the following Formula, in the range of 0.1 to 170:

$$\text{Shear amount} = \{6 \times \text{Extrusion rate (cm}^3\text{/s)} \times \text{Parallel land area-passing time (s)}\}/\{\text{Parallel land area sectional area (cm}^2) \times \text{Lip gap (cm)}\}$$

The present invention also relates to an antistatic heat-molded article produced by thermoforming of the antistatic multilayer sheet.

The antistatic multilayer sheet according to the present invention has a multilayer structure formed by coextrusion, has coat layers constituted of a transparent resin A and substantively not containing a polymeric antistatic agent and at least one antistatic layer constituted of a transparent resin B as the base resin and a polymeric antistatic agent placed in contact with the inside of the coat layer, in the configuration wherein the coat layers are placed on the outermost faces of the multilayer sheet; and, because the sheet has an initial electrostatic potential in electrostatic half-life measurement of 2.5 kV or lower, it retains its antistatic property consistently and resistant to deposition of dirts and dusts for an extended period of time and is prevented from generation of troubles caused by static electricity.

In addition, the antistatic multilayer sheet according to the present invention, which as a distinctness of image of 60% or higher, is transparent and superior in appearance.

Accordingly, the antistatic multilayer sheet according to the present invention is useful in applications such as cover materials for illumination apparatuses, various apparatuses such as electronic products, electronic home appliances, and OA devices, front plates for display units in meters and others, and also in applications where both transparency and antistatic property are demanded.

In addition, the multilayer sheet according to the present invention can be molded into desired shapes by thermoforming, and is useful as a material for packing containers and others superior in transparency and antistatic property.

BRIEF DESCRIPTION OF THE DRAWINGS

FIGS. 1A and 1B are schematic views illustrating the configuration of a multilayer sheet according to the present invention, and FIG. 1A shows a multilayer sheet in a first embodiment of the present invention, while FIG. 1B shows a multilayer sheet in a second embodiment of the present invention;

FIG. 2 is a schematic view illustrating the die-lip parallel land area in T die of an extruder for production of the multilayer sheet according to the present invention; and

FIG. 3 shows an example of the configuration of polishing rolls during extrusion sheet molding (triple rolls in FIG.).

DESCRIPTION OF THE PREFERRED EMBODIMENTS

The multilayer sheet according to the present invention comprises a multilayer sheet in a first embodiment having an antistatic layer containing a transparent resin B as the base resin and a polymeric antistatic agent and coat layers constituted of a transparent resin A as the base resin and not containing a polymeric antistatic agent formed on both faces of the antistatic layer, and a multilayer sheet in a second embodiment having a core layer constituted of a transparent resin C as the base resin, antistatic layers constituted of a transparent resin B as the base resin and a polymeric antistatic agent and coat layers constituted of a transparent resin A as the base resin but not containing a polymeric antistatic agent, which are laminated in order of coat layer/antistatic layer M/core layer/antistatic layer M/coat layer.

In the case of the second embodiment, it is necessary to select the base resin for the core layer properly to make the distinctness of image of multilayer sheet 60% or higher, and thus, the transparent resin C is used as the base resin for the core layer. The multilayer sheet in the second embodiment of the present invention is a transparent multilayer sheet allowing reduction in the amount of the antistatic agent in the entire multilayer sheet, yet exhibiting desirable antistatic performance, and consequently allowing reduction of overall cost. In the present invention, each of the transparent resins A, B and C is, as will be described below, a thermoplastic resin having a particular total light transmittance and a particular haze, and a resin corresponding to the "transparent plastic" specified in JIS K7361 (1997) can be used favorably. The "base resin" as used in the present invention means a thermoplastic resin contained in an amount of 50 wt% or higher in each layer constituting the multilayer sheet.

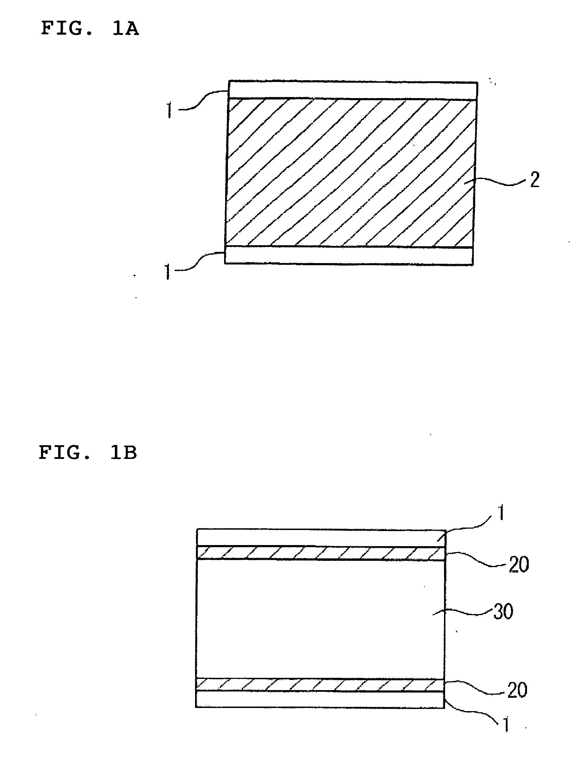

The multilayer sheet according to the present invention will be described below with reference to drawings. FIG. 1 is a view illustrating the configuration of a multilayer sheet according to the present invention. FIG. 1A shows a multilayer sheet in the first embodiment of the present invention, which has an antistatic layer 2 constituted of a transparent resin B as the base resin and a polymeric antistatic agent (hereinafter, also referred to as antistatic layer C) and coat layers 1 and 1 constituted of a transparent resin A as the base resin but not containing a polymeric antistatic agent formed on both faces thereof.

FIG. 1B shows a multilayer sheet in the second embodiment of the present invention, which has a core layer 30 constituted of a transparent resin C as the base resin, antistatic layers 20 constituted of a transparent resin B as the base resin and a polymeric antistatic agent (hereinafter, may be referred to as antistatic layer M) formed on both faces thereof, and coat layers 1 and 1 containing a transparent resin A as the base resin but not containing a polymeric antistatic agent formed additionally on faces of the respective antistatic layers.

Each of the multilayer sheets in the first and second embodiments of the present invention is a multilayer sheet having a distinctness of image of 60% or higher that is transparent and continuously antistatic property with its initial electrostatic potential of 2.5 kV or lower, as determined in measurement of its electrostatic half-life. The initial electrostatic potential is a value as determined after the sheet is washed with water.

The sheet in the first embodiment is a multilayer sheet that is superior in antistatic property, because the entire sheet excluding the coat layers (antistatic layer C) in the multilayer sheet contains an antistatic agent and thus, has a significantly reduced volume resistivity. However, the polymeric antistatic agent, which is often slightly colored, makes the product sheet yellowed, raising the so-called yellow index (YI value). In addition, the polymeric antistatic agent often has ether bonds in the molecule, raising some concern about weather resistance. It is possible to overcome such problems, by adding a bluing agent to the antistatic layer C or by adding an ultraviolet absorbent, a photostabilizer, an antioxidant or the like to the antistatic layer C and the coat layers as a weather-resistance stabilizer for improvement in weather resistance, but such a method also has a disadvantage of increased material cost, compared to the sheet in the second embodiment.

In the antistatic multilayer sheet, the antistatic effect is exerted by the antistatic agent present mainly in the antistatic layer under the coat layers, especially in the region of antistatic layer in contact with the coat layers. For that reason, it is possible to obtain the antistatic effect without deterioration in antistatic performance, by making the polymeric antistatic agent present more in the region in contact with the coat layers. In the configuration of the multilayer sheet in the second embodiment, it is possible to reduce the addition amount of the expensive antistatic agent, to eliminate or significantly reduce the use amount of a bluing agent or a weather-resistance stabilizer added to the core layer, and thus, to obtain a transparent multilayer sheet that is superior in antistatic property. The sheet in the second embodiment of the present invention is a multilayer sheet wherein antistatic layers selectively containing an antistatic agent are formed in the regions in contact with the coat layers.

The multilayer sheet according to the present invention is produced by a multilayer sheet-molding method of withdrawing a multilayer sheet coextruded through a T die under a particular extrusion condition around polishing rolls for withdrawing (hereinafter, also referred to simply as "rolls"), in such a manner that coat layers constituted of a transparent resin A as the base resin but not containing polymeric antistatic agent are formed on both faces of an antistatic layer C constituted of a transparent resin B as the base resin and a polymeric antistatic agent, or that laminating a core layer constituted of a transparent resin C as the base resin, antistatic layers M containing a transparent resin B as the base resin and a polymeric antistatic agent and coat layers consitited of a transparent resin A as the base resin but not containing a polymeric antistatic agent in order of coat layer/antistatic layer M/core layer/antistatic layer M/coat layer.

In the configuration of the present invention wherein an antistatic layer containing a polymeric antistatic agent is covered with coat layer (s) not containing a polymeric antistatic agent, it is possible to prevent deposition of the polymeric antistatic agent on roll and contamination of the roll surface even at a relatively high roll temperature, and to produce a multilayer sheet resistant to warping, transparent in appearance, and superior in antistatic property efficiently and reliably for an extended period of time. On the other hand, although there is a concern about the antistatic effect being hindered by the coat layers formed on the outermost faces of the multilayer sheet, the multilayer sheet exhibits desirable antistatic function sufficiently without problem if the coat layer is thin enough. The coat layer is coated on the antistatic layer to a thickness of normally not more than 50 $\mu$m, preferably not more than 30 $\mu$m. Generally, it is difficult to determine the thickness of each layer in the laminate sheet containing a transparent resin as the base resin directly, and the thickness of the coat layer is normally obtained by calculating the basis weight of the coat layer (weight/m$^2$) from the extrusion rate of the coat layer-molding resin for a certain period and the area of the formed coat layer and dividing it by the density of the transparent resin forming the coat layer at 23˚C (Method A, JIS K7112 (1999)). For example, if the basis weight of the coat layer is 50 g/m$^2$ and the density of the transparent resin, 1.19 g/cm$^3$ at 23˚C, the thickness of the coat layer is a basis weight of 50 divided by a density of 1.19, i.e., 42 ($\mu$m). The basis weight of the other layer can be calculated similarly. Each layer may be a layer of a single transparent resin, a layer of a mixture of transparent resins, or a layer of a mixture of a single transparent resin or a transparent resin mixture with an antistatic agent or other raw materials, but for convenience the resin density practically for use in calculation of the thickness of each layer from the basis weight is the density at 23˚C of the principal-component transparent resin occupying 50wt% or higher of each layer. When two or more kinds of transparent resins are used as mixed, the average of the densities of respective transparent resins at 23˚C is used.

The multilayer sheet according to the present invention is produced by a coextrusion sheet-molding method. Specifically, the multilayer sheet according to the present invention is produced by laminating an antistatic layer C-forming resin composition containing an antistatic agent and a coat layer-forming resin not containing a polymeric antistatic agent in order of coat layer/antistatic layer C/coat layer in the die of an extruder or laminating a core layer-forming resin, an antistatic layer M-forming resin composition containing an antistatic agent, and a coat layer-forming resin not containing an antistatic agent in order of coat layer/antistatic layer M/core layer/antistatic layer M/coat layer, and then, coextruding them out of the die. During the extruded sheet passing through the parallel land area of die lip, there is distortion (shift) in the multilayer sheet generated by shear at the interface of the antistatic agent-containing layer and the antistatic agent-free layer, especially of the antistatic layer and the coat layer, which in turn generates a scaly pattern recognizable on the entire surface of the multilayer sheet by visual observation. The scaly pattern once generated makes the image observed though the multilayer sheet less distinct, even if it is a transparent multilayer sheet. The scaly pattern described above does not reduce the total light transmittance of the multilayer sheet substantially, nor increase the other optical performance haze (cloudiness) substantially. After studies on the method of expressing the scaly pattern quantitatively, the scaly pattern is expressed by the distinctness of image specified in JIS K7105 (1981) in the present invention. Specifically, the image visibility is a value used for expressing the visibility of an image seen through a transparent plastic resin sheet quantitatively, and the value increases, as the scaly pattern diminishes, the haze decreases, or the surface smoothness of the multilayer sheet increases. That is, the distinctness of image is larger, when the light passing through the multilayer sheet is more linear.

The inventors have found that it was possible to prevent generation of the scaly pattern by controlling the shear applied to the molten resin formed to multilayered sheet when it passes through the parallel land area of T die lip and extruding the resin while the shear amount in the parallel land area is adjusted in a particular range. The shear amount can be adjusted with die lip clearance, lip parallel land length, and extrusion rate; and it is possible to obtain a transparent multilayer sheet favorable in appearance without scaly pattern or with significantly reduced scaly pattern, by performing coextrusion while keeping the shear amount, as calculated according to Formula (1) described below, much lower than that when this kind of sheet is normally produced.

In the present invention, the transparent resins used in respective layers may be the same as or different from each other, but it is preferable that the resins are the same as each other, because it is possible to keep the haze low even when the wastes such as the sheet edge cut off for product finishing are recycled partially as the base resin for the antistatic or core layer of the multilayer sheet. However, even if the transparent resins used in respective layers are different from each other, it is possible to keep the haze low even when the resins are recycled partially for the core layer of the multilayer sheet, if the refractive indexes are close to each other; and thus, the resins may be recycled in the range that does not impair the advantage of the present invention.

The transparent resin used in the present invention is a thermoplastic resin having a total light transmittance (JIS K7136 (2000), hereinafter, may be referred to as total light transmittance R) of 65% or higher and a cloudiness indicator haze (JIS K7136 (2000), hereinafter, may be referred to as haze R) of 15% or lower, as determined as molded into a smooth-surfaced flat plate having a thickness of 2 mm. Higher total light transmittance R and smaller haze R lead to increase in the distinctness of image of the multilayer sheet according to the present invention and decrease in the haze of the multilayer sheet (hereinafter, may be referred to as haze S). Accordingly, the total light transmittance R of the transparent resin for use in the present invention is preferably 75% or higher, more preferably 85% or higher, still more preferably 90% or higher, and the haze R thereof is preferably 12% or lower, more preferably 10% or lower, still more preferably 5% or lower, and most preferably 3% or lower.

Generally, even the same kind of transparent resins are used, increase in thickness leads to decrease in total light transmittance R and also increase in haze R at the same time. The antistatic layer C or the core layer according to the present invention occupy most of the thickness of the multilayer sheet (80% or higher of entire thickness), and it is preferable that the transparent resin B, the base resin for the antistatic layer C or the transparent resin C, the base resin for the core layer, has a higher total light transmittance R or a lower haze R, for making the distinctness of image of multilayer sheet more favorable and the haze S lower. The total light transmittance R and the haze R are selected properly according to the difference in requirements in the desired application. For example, for use in the optical field, a transparent resin having a higher total light transmittance R and a low haze R is particularly preferable.

When the multilayer sheet according to the present invention is a multilayer sheet in the three-layer structure of the first embodiment, i.e., in the three-layer structure of an antistatic layer C constituted of a transparent resin B as the base resin and an antistatic agent and coat layers constituted of a transparent resin A as the base resin, the difference in refractive index between the transparent resin B and the polymeric antistatic agent is preferably 0.05 or less. A difference in refractive index of more than 0.05 results in increase in haze S, deterioration in distinctness of image and thus, disappearance of clear transparency, when the resins with different refractive indices are blended. For that reason, the difference in refractive index is more preferably 0.04 or less, more preferably 0.03 or less, and the difference in refractive index is most preferably 0 (zero).

When the multilayer sheet according to the present invention is a multilayer sheet in the five-layered structure in the second embodiment, i.e., in the five-layered structure having a core layer constituted a transparent resin C as the base resin, antistatic layers M (antistatic layers constituted of a transparent resin B as the base resin and an antistatic agent) and coat layers constituted of a transparent resin A as the base resin and not containing a polymeric antistatic agent and then laminating them in order of coat layer/antistatic layer M/core layer/antistatic layer M/coat layer, the difference in refractive index between the transparent resin B and the polymeric antistatic agent is, similarly to the first embodiment, preferably 0.05 or less, more preferably 0.04 or less, still more preferably 0.03 or less, and the difference in refractive index is most preferably 0 (zero). Similarly to the transparent resin C, the total light transmittance R of the transparent resin B is preferably higher and the haze R lower, but, because the antistatic layer M can be thinned in the case of the second embodiment where in antistatic layers M are formed on both faces of the core layer, it is possible to reduce the influence of the transparent resin B on distinctness of image, and thus, favorably the transparency is unaffected as a whole even when the total light transmittance R of the transparent resin B is slightly lower than that of the transparent resin C. When the multilayer sheet is a sheet in the second embodiment, the core layer therein preferably contains no antistatic agent from the point of raw material cost, but may contain the antistatic agent if the addition amount is small (5 wt% or lower, preferably 3 wt% or lower, more preferably 1 wt% or lower in 100 wt% of the core layer). When wastes of the multilayer sheet such as edge sheet are to be recycled, they are preferably added to the core layer or the antistatic layer M, but addition of the wastes such as edge sheet to the core layer is also effective in increasing the adhesive strength between the antistatic layer M and the core layer.

As described above, the coat layer in the multilayer sheet according to the present invention, which is formed mainly for prevention of contamination of the roll surface by the polymeric antistatic agent, does not contain the polymeric antistatic agent fundamentally. However, the polymeric antistatic agent may be added in an extremely small amount, if it is in the range that does not cause any trouble in production of the multilayer sheet according to the present invention. Thus, the concept of the "coat layer constituted of a transparent resin A as the base resin but not containing a polymeric antistatic agent" includes a "coat layer constituted a transparent resin A as the base resin and containing also a polymeric antistatic agent in an amount in the range that does not inhibit prevention of the contamination of the roll surface caused by the polymeric antistatic agent". For example, a polymeric antistatic agent higher in metal adhesion may be added in an amount of about 2 wt% (wt% with respect to the sum of the polymeric antistatic agent and the transparent resin A) or less. However, the addition amount is preferably smaller, preferably 1 wt% or smaller, more preferably 0.3 wt% or smaller. Alternatively, a polymeric antistatic agent lower in metal adhesion may be added in an addition amount of about 3 wt% (wt% with respect to the sum of the polymeric antistatic agent and the transparent resin A) or less. However, the addition amount of the polymeric antistatic agent lower in metal adhesion is also preferably lower, preferably 2 wt% or lower, more preferably 1 wt% or lower.

The transparent resin A, i.e., the base resin for the coat layer in the multilayer sheet according to the present invention, preferably has a higher total light transmittance R and a lower haze R, similarly to the transparent resin B of the base resin for the antistatic layer and the transparent resin C of the base resin for the core layer, but, because the polymeric antistatic agent is not contained or contained only in a trace amount if contained, and the coat layer is a thin film, the distinctness of image of the multilayer sheet is kept higher even when the total light transmittance R thereof is lower and the haze larger than those of the transparent resin of the base resin for the core layer and the antistatic layer.

Generally, it is needed that a layer containing a polymeric antistatic agent in a sufficient amount should be present on the sheet surface for sufficient expression of antistatic effect, but the layer containing a polymeric antistatic agent in a great amount, if present on the sheet surface, often causes contamination of the roll surface. In the multilayer sheet according to the present invention, because the coat layers not containing a polymeric antistatic agent are formed on the sheet surface, it is possible to raise the antistatic performance and reduce the initial electrostatic potential of sheet, by increasing the addition amount of the polymeric antistatic agent to the antistatic layer C or the antistatic layer M and increasing the thickness of the antistatic layer.

Thus when the multilayer sheet according to the present invention is a sheet in the first embodiment, i.e., a sheet in the three-layer structure having an antistatic layer C and coat layers formed on both faces thereof, the polymeric antistatic agent is blended in the entire region except the coat layers. The coat layer in the multilayer sheet according to the present invention is an extremely thin film of 50 μm or less in thickness; thus, the thickness of the antistatic layer C containing an antistatic agent may be regarded practically as the thickness of the entire multilayer sheet; and thus, increase in antistatic agent content leads to improvement in antistatic performance, but possibly also to yellowing of the sheet, i.e., increase in the so-called yellow index (YI value) and deterioration in weather resistance, under the influence of the polymeric antistatic agent, and therefore, it is preferably to keep the addition amount of the polymeric antistatic agent lower in the range allowing expression of the antistatic property.

The amount of the polymeric antistatic agent added to the antistatic layer C of the multilayer sheet in the first embodiment of the present invention is preferably 25 wt% or lower, more preferably 23 wt% or lower, more preferably 20 wt% or lower, and most preferably 15 wt% or lower, with respect to the total weight of the polymeric antistatic agent and the transparent resin B. An excessively low addition amount results in increase in the initial electrostatic potential of the multilayer sheet, and thus, the addition amount is preferably 3 wt% or higher, more preferably 5 wt% or higher, and more desirably 7 wt% or higher.

The thickness of the antistatic layer C in the multilayer sheet of the first embodiment is about 0.2 mm to 15 mm, although it depends on its application.

On the other hand, in the case of the multilayer sheet (coat layer/antistatic layer M/core layer/antistatic layer M/coat layer) in the second embodiment of the present invention, the antistatic layer M can be thinned as needed, relatively to the entire thickness of the multilayer sheet. For this reason, the polymeric antistatic agent added thereto is less influential on the yellow index or the weather resistance by increase in the amount thereof, even when the addition amount is increase to some degree, relative to the case in the first embodiment of the present invention. Thus, the amount of the polymeric antistatic agent added to the antistatic layer M is preferably 5 to 35 wt%, more preferably in the range of 5 to 30 wt%, more preferably 7 to 28 wt%, more preferably 10 to 25 wt%, with respect to the total weight of the polymeric antistatic agent and the transparent resin B, although it depends on the desirable antistatic performance and the thickness of the coat layer.

In the second embodiment, wherein the antistatic agent is present mainly in the antistatic layer M at higher concentration, therefore it is possible to reduce the amount of the antistatic agent added to the entire multilayer sheet to an amount lower than that in the first embodiment, for obtaining the same antistatic performance. In the second embodiment above, the amount of the antistatic agent added to the entire multilayer sheet is preferably 9 wt% or lower, more preferably 7 wt% or lower, and particularly preferably 4 wt% or lower, although it depends also on the thickness of the multilayer sheet. On the other hand, the lower limit value is preferably 0.1 wt% or higher, more preferably 0.3 wt% or higher, and still more preferably 0.5 wt% or higher, from the point of antistatic performance.

In the case of the second embodiment, the multilayer sheet exhibits superior antistatic property, even when the amount of the antistatic agent added to the entire multilayer sheet is significantly small. Also in the case of the second embodiment, the thickness of the antistatic layer M and the amount of the antistatic agent in the antistatic layer M exerts influence on antistatic property. The thickness of the antistatic layer M on each face of the core layer is approximately 3 to 300 $\mu$m, and an excessively low thickness leads to deterioration in antistatic performance, fluctuation in thickness uniformity of the layer caused by film forming difficulty, and thus, fluctuation in antistatic property, and is thus unfavorable. On the other hand, an excessively large thickness leads to loss of the advantageous effects of reducing the amount of the antistatic agent added to the multilayer sheet in the second embodiment. Therefore, the thickness of each antistatic layer M is preferably 10 to 200 $\mu$m, more preferably 20 to 150 $\mu$m. Because the surface hardness of the antistatic agent is smaller than that of the transparent resin according to the present invention, increase in thickness of the antistatic layer M tends to be deteriorated in surface hardness of the multilayer sheet. Accordingly, the maximum thickness of the antistatic layer M is preferably 100 $\mu$m, more 80 $\mu$m, from the viewpoint of surface hardness of the multilayer sheet.

In the multilayer sheet of the second embodiment, the thickness of the core layer is approximately 0.2 mm to 15 mm, although it may vary depending on applications.

If the antistatic agent contains a polyether component or a polyolefin component as described below, the hardness of antistatic agent is lower than that of the transparent resin according to the present invention. Accordingly, the hardness of the antistatic layer itself may be lowered than when no antistatic agent was blended, depending on the kind of antistatic agent used and the blending rate of the antistatic layer. The multilayer sheet according to the present invention has a very thin coat layer; thus, the hardness of the antistatic layer has a great influence on the surface hardness of the multilayer sheet; decrease in the hardness of the antistatic layer likely leads to decrease in the surface hardness of the multilayer sheet, raising a concern about scratching of the multilayer sheet surface.

Thus from the viewpoint of surface hardness of the multilayer sheet, the amount of the antistatic agent added to the antistatic layer is desirably smaller, and the maximum blending rate is preferably 30 wt%, more preferably 25 wt%, still more preferably 20 wt%, with respect to the total weight of the antistatic agent and the transparent resin B.

The surface hardness of the multilayer sheet is governed by the thickness of the antistatic layer, and the thickness of the antistatic layer is preferably thinner for preservation of high surface hardness. Therefore from the viewpoint of surface hardness of the multilayer sheet, the configuration of the multilayer sheet is preferably that of the second embodiment allowing thinning of the antistatic layer, i.e., a five-layered structure of coat layer/antistatic layer M/ core layer/antistatic layer M/coat layer, and the maximum thickness of the antistatic layer M is preferably 100 $\mu$m, more preferably 80 $\mu$m.

The multilayer sheet according to the present invention has coat layers formed on the outmost faces thereof, and the thickness of the coat layer also has influence on the antistatic property. Specifically, an excessively thick coat layer leads to insufficient antistatic effect, while an excessively thin coat layer leads to insufficient roll contamination-preventing effect. Accordingly, the maximum thickness of favorable coat layer is preferably 50 $\mu$m or less, more preferably 35 $\mu$m or less, and most preferably 25 $\mu$m or less. On the other hand, the minimum thickness is preferably 1 $\mu$m or more, more preferably 2 $\mu$m or more, still more preferably 3 $\mu$m or more, for reliable effect of the function of the coat layer, although it also depends on the film-forming characteristics of the T die used.

Weather-resistance stabilizers for weather resistance such asultravioletabsorbent,photostabilizer,and antioxidant may be added to each layer in the multilayer sheet according to the present invention as needed. Addition of these stabilizers does not cause problems because the amount of the weather-resistance stabilizers added is normally 1 wt% or lower in each layer, low enough to be uninfluential on transparency. In addition, the multilayer sheet in the second embodiment can be made sufficiently weather resistant by addition of the weather-resistance stabilizers to the coat layer and the antistatic layer M, and is thus, superior in material cost to the multilayer sheet in the first embodiment.

The multilayer sheet according to the present invention in the first or second embodiment has a sufficient transparency, if its total light transmittance is 75% or higher, but the total light transmittance is more preferably 85% or higher, more preferably 89% or higher.

The multilayer sheet according to the present invention, which has a distinctness of image of 60% or higher and has no scaly pattern or almost invisible pattern if present, is a clear transparent multilayer sheet superior in appearance and resistant to diffusion of the light passing through the multilayer sheet. Such a transparent multilayer sheet substantially scaly pattern-free and superior in distinctness of image can be produced while the extrusion condition is adjusted in a particular favorable range as will be described below.

When the distinctness of image is higher, there is a smaller scaly pattern, the light passing through the multilayer sheet is more linear, and images and objects seen through the multilayer sheet are more highly recognizable. The distinctness of image is preferably 65% or higher, more preferably 75% or higher, still more preferably 85% or higher, and most preferably 87% or higher, for improvement in the visibility through the multilayer sheet and also in the recognizability of images and objects through the multilayer sheet. However, the degree of the distinctness of image is determined normally from the balance in performance between optical performance and antistatic effect in the application field of the multilayer sheet.

Colorants such as pigment and dye may be added to the multilayer sheet according to the present invention in the range that does not damage the image visibility. The dye or pigment for use in the present invention is not particularly limited, if it is a dye or pigment for use in a transparent resin such as that based on acrylic resin, polycarbonate resin, styrenic resin, or the like. Examples thereof include xanthene-based, thiazole-based, thiazine-based, perylene-based, and diaminostilbene-based dyes, as well as pigments such as titanium dioxide, chromium oxide, cadmium yellow, cadmium orange, cadmium red, and carbon black. These colorants may be added to all layers including the coat, antistatic and core layers, or selectively to anyone layer or two ormore layers according to the application, and the total addition amount thereof is in a range giving a distinctness of image of 60% consistently, and is preferably 0.1 wt part or less, more preferably 0.05 wt part or less, and still more preferably 0.03 wt part or less with respect to 100 wt parts of the total weight of the entire multilayer sheet.

Addition of a colorant to the multilayer sheet according to the present invention may lead to deterioration in total light transmittance to a total light transmittance of 75% or lower, but even in such a case, it is possible to retain favorably high distinctness of image. Such a colored multilayer sheet can be used in the fields that do not demand high total light transmittance.

Surface resistivity is generally, frequently used as an indicator of the antistatic performance. Generally, a thermoplastic resin sheet containing an antistatic agent has an initial electrostatic potential lowered and an electrostatic half-life shortened, as the surface resistivity thereof is lowered. The multilayer sheet according to the present invention, which has coat layers (thermoplastic resin layers containing no antistatic agent) on the surface, has an initial electrostatic potential lower than that estimated generally from the surface resistivity, because of deviation from the relationship described above. A multilayer sheet particularly superior in antistatic performance among the multilayer sheets according to the present inventionhas an electrostatic half-life shorter than that estimated from the surface resistivity. For that reason, the initial electrostatic potential and the electrostatichalf-lifeareusedforevaluationof the antistatic performance of the multilayer sheet according to the present invention. As for the relationship between the initial electrostatic potential and the electrostatic half-life, because the electrostatic half-life is a half-life at a particular initial electrostatic potential, if multilayer sheets having the same electrostatic half-life are compared, a multilayer sheet having the electrostatic half-life at a lower electrostatic potential is practically more resistant to static charge. Therefore in evaluation of the antistatic performance, the initial electrostatic potential is evaluated preferentially, and a multilayer sheet shorter in electrostatic half-life is favorable in antistatic performance and thus preferable. The surface resistivity of the multilayer sheet according to the present invention after water washing is approximately $10^{12}$ to $10^{15}$ Ω.

The initial electrostatic potential and the electrostatic half-life in the present invention are those of the multilayer sheet afterwaterwashing, and an initial electrostatic potential of 2.5 kV or lower (under application of 10 kV) is sufficient for needed antistatic effect, but the initial electrostatic potential is preferably 2.3 kV or lower, more preferably 2.0 kV or lower, and most preferably 1.7 kV or lower, for more sufficient antistatic effect. In addition, an electrostatic half-life of 60 seconds or less is sufficient for more favorable antistatic effect, but the electrostatic half-life is preferably 40 seconds or less, more preferably 20 seconds or less, and most preferably 10 seconds or less for further more favorable antistatic effect. The electrostatic half-life is normally longer than 0 second. The initial electrostatic potential is preferably lower, and the electrostatic half-life shorter from the point of antistatic effect, but the initial electrostatic potential may be determined properly, taking into consideration its application and balance with other physical properties.

The multilayer sheet according to the present invention is produced by extrusion sheet-molding method, i.e., by extruding a sheet-shaped multilayer sheet through a T die of extruder and molding the sheet, while it is withdrew through polishing rolls, into a sheet-shaped or plate-shaped product having a thickness of approximately 0.2 to 15 mm. The multilayer sheet according to the present invention, a relatively thin sheet having a thickness of 1 mm or less, preferably 0.7 mm or less, depending on the rigidity of the raw material resin, is generally converted into a product wound in a roll shape, which is stored and transported in the product form. The thick plate-shaped product is cut to a particular length as needed and stored and transported as stacked. The multilayer sheet having a thickness of 0.2 to 2.5 mm gives antistatic molded articles in various shapes by thermoforming method. Even in the same layer structure, the multilayer sheet has a distinctness of image lower when it is thicker. Accordingly when the multilayer sheet is too thick, depending on the kind of the transparent resin and the layer structure used, it may not be possible to obtain the distinctness of image desirable in the present invention, and thus, the thickness of the multilayer sheet is preferably 10 mm or less, more preferably 7 mm or less, still more preferably 5 mm or less.

A resin belonging to the "transparent plastics" as specified in JIS K7361 (1997) is used favorably as the transparent resin for each layer constituting the multilayer sheet according to the present invention (transparent resin A, B or C). Specific examples of the transparent resins include acrylic resins, styrenic resins, polycarbonate resins, thermoplastic polyester resins, and cyclic olefin resins. Acrylic resins include homopolymers of an alkyl acrylate ester or/and an alkyl methacrylate ester (hereinafter, referred to as (meth) acrylate esters) or copolymers of (meth)acrylate esters, (meth)acrylate ester-based copolymers containing a (meth)acrylate ester-based unit in an amount of 50 mol% or higher and other comonomer-based units in an amount of 50 mol% or lower, and the mixtures of two or more of them. Examples of the (meth)acrylate ester homopolymers or copolymers include polymethyl methacrylate, polyethyl methacrylate, polypropyl methacrylate, butyl polymethacrylate, polymethyl acrylate, polyethyl acrylate, methyl methacrylate-ethyl methacrylate copolymers, methyl methacrylate-butyl methacrylate copolymers, and methyl methacrylate-ethyl acrylate copolymers. Among them, polymethyl methacrylate, polymethyl acrylate, methyl methacrylate-ethyl methacrylate copolymers, and methyl methacrylate-ethyl acrylate copolymers are preferable, and polymethyl methacrylate is more preferable.

Alternatively, examples of the (meth)acrylate ester-based copolymers include methyl methacrylate-styrene-butylene copolymers, methyl (meth)acrylate-styrene copolymers, ethyl (meth)acrylate-styrene copolymers, and methyl methacrylate-acrylonitrile-butadiene-styrene copolymers. Among them, methyl methacrylate-styrene-butylene copolymers and methyl methacrylate-styrene copolymers are preferable.

The styrenic resins include styrene homopolymers, styrene copolymers containing styrene-derived units in an amount of more than 50 mol% and other comonomer-derived units in an amount of less than 50 mol%, and the mixture of one or two or more kinds of them. Examples of the styrenic resins include polystyrene, AS resins, ABS resins, methyl methacrylate-styrene copolymers containing styrene-derived units in an amount of more than 50 mol%, and styrene-diene block copolymers.

Examples of the polycarbonate resins include bisphenol A (4,4'-dihydroxydiphenyl-2,2-propane) polycarbonate, bisphenol F (4,4'-dihydroxydiphenyl-2,2-methane) polycarbonate, bisphenol S (4,4'-dihydroxydiphenyl sulfone) polycarbonate, and 2,2-bis(4-dihydroxyhexylpropane) polycarbonate. In particular among them, optical-grade polycarbonate resins are favorable.

Alternatively, examples of the thermoplastic polyester resins include aromatic polyesters (e.g., polyethylene terephthalate, polybutylene terephthalate, polycyclohexane dimethylene terephthalate and polyethylene naphthalate) and aliphatic polyesters.(e.g.,polybutylene adipate,polyethylene adipate and poly-e-caprolactone).

The cyclic olefin polymers include cyclic olefinhomopolymers, copolymers of cyclic olefins, or copolymers of a cyclic olefin and ethylene or α-olefin, and the mixtures of two or more of them. Examples of the cyclic olefinic polymers include "Apel" and "Topas" products available from Mitsui Chemicals, Inc., and "Zeonex" and "Zeonor" products available from Zeon Corporation.

The transparent resin for use in each layer for the multilayer sheet according to the present invention may be a single resin or a mixture of two or more resins. When a single transparent resin is used, the resins for respective layers may be the same as or different from each other. When different resins are used, the resins having similar refractive indices or the same refractive index are used. When two or more of the transparent resins according to the present invention are used as mixed, or when the transparent resin and other thermoplastic resins in an amount that does not impair the advantages of the present invention are used as mixed, the transparent resins for use preferably have similar refractive indices. When the difference in refractive index between respective transparent resins or the difference in refractive index between the transparent resin and the other thermoplastic resin is large, the mixed resin becomes turbid, leading to deterioration in transparency and distinctness of image, depending on the mixing ratio, and thus, the difference in refractive index is desirably smaller. Specifically, the difference in refractive index is preferably 0.05 or less, more preferably 0.04 or less, still more preferably 0.03 or less, and the difference in refractive index is most preferably 0 (zero).

The base transparent resin B used for the antistatic layer C or the antistatic layer M constituting the multilayer sheet according to the present invention is preferably an acrylic resin, particularly preferably polymethyl methacrylate. An acrylic resin, in particular polymethyl methacrylate,which isexcellent in transparency, has small difference in refractive index with commercially available polymeric antistatic agent for use in the present invention, and does not demand high temperature for melting processing and provides the advantageous effects of the present invention to the maximum extent. The properties of the acrylic resin, in particular of polymethyl methacrylate, described above are also advantageous for production of the multilayer sheet according to the present invention, even when it is used for the coat or core layer.

The polymeric antistatic agent for use in the present invention is, for example, (a) a block polymer having a structure wherein polyolefin blocks and hydrophilic polymer blocks having a specific volume resistivity of $1 \times 10^5$ to $1 \times 10^{11}$ Ω·cm are bound to each other repeatedly via at least one bond selected from the group consisting of ester, amide, ether and imide bonds, (b) a hydrophilic polymer containing at least one polyether selected from the group consisting of polyether ester amides, polyether amides and polyether amide imides, or (c) a block polymer consisting of an amido group-containing hydrophobic polymer such as polyamide and/or polyamide-imide, a polyether-containing hydrophilic polymer such as polyether diol and/or polyether diamine, and an aromatic polyester.

The block polymer (a) is described in detail in JP-A NO. 2004-190028; the polyether-containing hydrophilic polymer (b), in JP-A NO. 2006-206894; and the block polymer (C), in JP-A NO. 2006-233204.

The polymeric antistatic agent for use in the present invention preferably has a refractive index proximal to that of the blended base transparent resin. A large difference in refractive index may lead to clouding of the antistatic layer C or the antistatic layer M and deterioration in the transparency of multilayer sheet and distinctness of image, and thus, the difference in refractive index is desirably smaller. Specifically, the difference in refractive index is preferably 0.05 or less, more preferably 0.04 or less, yet more preferably 0.03 or less, and the difference in refractive index is most preferably 0 (zero).

Hereinafter, production of the multilayer sheet according to the present invention will be described specifically.

The multilayer sheet according to the present invention can be prepared in a common facility for extrusion sheet molding. In production of the multilayer sheet in the first embodiment of the present invention (coat layer/antistatic layer C/coat layer), at least two extruders are used for coextrusion. In production of the multilayer sheet in the second embodiment of the present invention (coat layer/antistatic layer M/core layer/antistatic layer M/coat layer), at least three extruders are used for coextrusion. Because some of the base transparent resins are hygroscopic, the extruder for use is preferably a vent-type extruder.

The extruder for forming the antistatic layer C or the antistatic layer M containing a polymeric antistatic agent is preferably an extruder higher in kneading efficiency for highly dispersing the polymeric antistatic agent in the matrix resin.

The multilayer structure may be formed by any method, for example, by a feed-block-mode lamination method or a multi-manifold-die-mode lamination method.

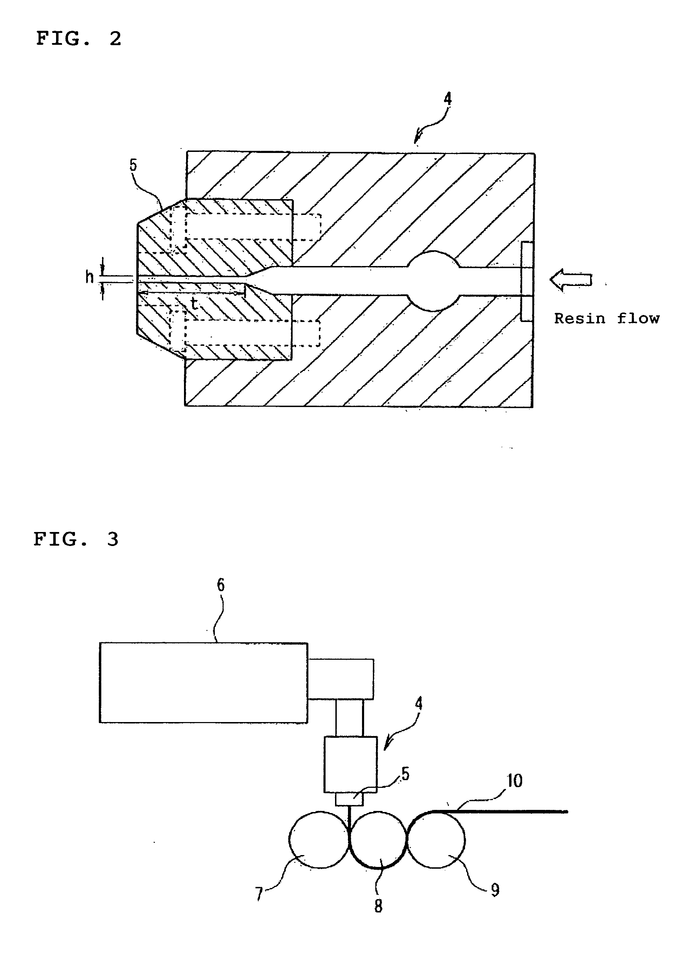

A common hard chrome-plated polishing roll may be used as the sheet-withdrawing roll. Generally, triple polishing rolls are used as the polishing rolls, but quadruple polishing rolls may be used as needed. FIG. 3 shows an example of the configuration of triple polishing rolls.

The temperature of the polishing rolls may be determined arbitrarily, and may vary to some extent according to the glass transition temperature of the transparent resins used and the thickness of the desired product, but selected is a temperature condition that does not cause deterioration in surface glossiness of the product sheet and warping of the plate-shaped product. The temperature range of the rolls is generally 30 to 180˚C, preferably 40 to 160˚C, and most preferably 50 to 140˚C. Normally, lower temperature is used for a thin sheet product, while higher temperature is used for a thick plate-shaped product. In addition, generally, the roll temperature is set higher on the downstream side rolls. The temperature of the most downstream side roll is preferably 85˚C or higher, more preferably 90 to 170˚C, still more preferably 90 to 145˚C, and most preferably 90 to 140˚C for prevention of warping of the multilayer sheet.

In production of the multilayer sheet according to the present invention, the resin or the resin composition for each layer is molten and kneaded in each extruder; the respective resins or the resin compositions are layered into a laminate in a die; and the laminate is coextruded into a multilayer sheet, which is then brought into contact with rolls. The resin temperature in each layer before laminating thereof in the die may vary according to the kind of the resin used, but is normally 180 to 280˚C. The resin temperature is monitored at the breaker plate placed at the outlet of the extruder or at the breaker plate placed at the outlet of a gear pump if installed, but, if the resin temperature of each layer is unaffected by the temperature of other layers, the resin is coextruded at a temperature close to the measured resin temperature as described above. Generally, the polymeric antistatic agent is less stable thermally, and the temperature of the resin for forming a layer containing a polymeric antistatic agent is preferably, slightly lower than the temperature of the resins for other layers, and is thus, normally 180 to 265˚C, preferably 195 to 265˚C, and more preferably 210 to 250˚C.

As for melting and kneading of an antistatic agent and a transparent resin B, the transparent resin containing the antistatic agent dispersed in a network structure is more favorable in antistatic property. For dispersion of the antistatic agent in the network structure, the antistatic agent preferably has a melt viscosity lower than that of the transparent resin B at the same temperature. The resin-melting temperature of the antistatic agent-containing layer may vary to some degree according to the kind of the resin used, but is approximately 230˚C, and the rate of the melt viscosity of the antistatic agent to that of the transparent resin B is preferably 1:35 to 1:1.5, more preferably 1:25 to 1:2, as melt viscosity (Pa·s, the melt viscosity will be referred to as melt viscosity below) at a temperature of 230˚C and a shear rate of 100 s$^{-1}$. The melt viscosity of the transparent resin B mixed with an antistatic agent is generally about 300 to 3,000 Pa·s, but preferably 600 to 2,500 Pa·s, more preferably, 900 to 2,200 Pa·s, for improvement of the kneading and film-forming characteristics.

In the present invention, the transparent resin A, the base resin for the coat layer constituting the multilayer sheet, which becomes in contact with the internal wall of the die during extrusion, is easily exposed to greater shear amount, resulting in distortion at the interface of the coat layer and the antistatic layer M or the antistatic layer C in contact with thereof, which may in turn trigger generation of a scaly pattern. Accordingly, the melt viscosity of the transparent resin A is preferably lower. Specifically, it is preferably 300 to 2,500 Pa·s, more preferably 500 to 2,300 Pa·s, and still more preferably 700 to 2,000 Pa·s.

For production of the multilayer sheet according to the present invention superior in distinctness of image, it is important to coextrude the resin while adjusting the shear amount in the die, in particular in the lip parallel land area of the die, during extrusion in the particular range calculated according to the following Formula (1), by taking into consideration the melting temperature of the resin in the extruder, resin temperature during extrusion, resin melt viscosity and additionally extrusion rate during extrusion.

It is thus possible to prevent or reduce generation of the scaly pattern caused by the local shift at the interface between the antistatic layer M or the antistatic layer C and the coat layer and between the antistatic layer M and the core layer.

FIG. 2 is a schematic cross-sectional view illustrating an example of the T die 4 used during extrusion sheet molding. In FIG. 2, 5 represents a lip unit; h, lip gap; and t, parallel land length. The parallel land area is a terminal parallel area in the die that is formed for control of the sheet thickness, with which the molten resin is in contact.

The shear amount in the parallel land area is a dimensionless numerical value obtained by the Formula (1) below. The molten resin seemingly flows in the parallel land area in steady laminar flow. The following Formula (1) is the product of the shear rate to the molten resin flowing in the parallel land area and the period of the molten resin passing through the parallel land area (parallel land area-passing time). Alternatively, the parallel land area-passing time is a value obtained by dividing the volume of the parallel land space ($cm^3$) by the volume of the extruded molten resin per second ($cm^3/s$). The volume of the parallel land space is the product of the parallel land length t, the lip gap h, and the lip width W. The volume of the extruded resin ($cm^3$) should be calculated by dividing the weight of the extruded resin extruded per second by the density of the molten resin, but each resin layer constituting the multilayer sheet is a mixture of various transparent resins or a transparent resin and a polymeric antistatic agent, and it is thus too complicated to calculate it for each resin in each layer, and thus for convenience, the density of the molten resin in any resin layer is regarded to be 1 $g/cm^3$ for calculation. Generally, the density of a transparent resin under normal temperature is about 1.1 $g/cm^3$; the density thereof in a molten state is smaller than the density under normal temperature; and the density of the molten resin may be regarded to be 1 $g/cm^3$ for convenience without significant problem.

$$\text{Shear amount} = \{6 \times \text{Extrusion rate } (cm^3/s) \times \text{Parallel land area-passing time } (s)\}/\{\text{Parallel land area sectional area } (cm^2) \times \text{Lip gap } (cm)\} \quad (1)$$

In the present invention, the suitable range of the shear amount in the parallel land area obtained in Formula (1) above may vary to some extent according to the kind of the transparent resin, but, when the transparent resin in the coat and antistatic layers is a (meth) acrylate ester homopolymer such as polymethyl methacrylate or a copolymer of (meth)acrylate esters, it is 170 or less, preferably 100 or less, and more preferably 50 or less. When the transparent resin in the coat and antistatic layers is a (meth)acrylate ester-based copolymer such as methacrylate ester-styrene copolymer, it is 40 or less, preferably 20 or less, and more preferably 5 or less. When the same resin is used, decrease in shear amount leads to increase in the distinctness of image of the multilayer sheet. However, an excessively smaller shear amount may possibly result in deterioration in extrusion stability, and thus, the shear amount is preferably 0.1 or more, more preferably 0.2 ormore, and still more preferably 0.3 or more.

The method of evaluating the multilayer sheet according to the present invention and of measuring the physical properties of the resin will be described below.

[Total light transmittance and haze]

A multilayer sheet was cut into pieces of 50 mm $\times$ 50 mm in size (thickness: as it was); one of the test pieces was analyzed with a turbidity meter (NDH2000, manufactured by Nippon Denshoku Industries Co., Ltd.) according to the method specified in JIS K7136 (2000); and the observed values were averaged, to give a total light transmittance.

The multiple test pieces are cut off by selecting at random, in the multilayer sheet, a first base point at the position 50 mm inward from one terminal in the width direction toward the other terminal, another base point at the position 100 mm toward the other terminal from the first base point, and so on (however, the final base point is located at a position 50 mm or more inward from the other terminal), while respective base points are located at the center of the test pieces and one side of each test piece is in accordance with the extrusion direction of the multilayer sheet. The total light transmittance and the haze of a transparent resin were determined by analyzing a surface-smooth flat molding plate having a thickness of 2 mm (50 mm $\times$ 50 mm in size) as the test piece, similarly to the test above, according to the method specified in JIS K7136 (2000) by using a turbidity meter (NDH2000, Nippon Denshoku Industries Co., Ltd.).

[Refractive index]

The refractive index in the present description is a value at 23˚C, as determined according to the method specified in JIS K7105 (1981) by using an Abbe's refractometer.

[Distinctness of Image] (Evaluation of scaly pattern)

A multilayer sheet was cut into pieces of 50 mm $\times$ 50 mm in size (thickness: as it was); each test piece was analyzed with a TM image clarity analyzer (ICM-1T, manufactured by Suga Test Instrument Co., Ltd.) by the transmission method specified in JIS K7105 (1981); and the observed values were averaged to give a distinctness of image. Each observed value was a value when the width of the optical comb was 0.25 mm.

The multiple test pieces are cut off by selecting at random, in the multilayer sheet, a first base point at the position 50 mm inward from one terminal in the width direction toward the other terminal, another base point at the position 100 mm toward the other terminal from the first base point, and so on (however, the final base point is located at a position 50 mm or more inward from the other terminal), while respective base points are located at the center of the test pieces and one side of each test piece is in accordance with the extrusion direction of the multilayer sheet. A value obtained when the test piece was so place in the analyzer that the extrusion direction of the test piece is in accordance with the vertical direction of the analyzer and a value obtained when the test piece was so placed in the analyzer that the extrusion direction of the test piece is orthogonal with the vertical direction of the analyzer were compared; and the lower value was used as the distinctness of image of the multilayer sheet.

[Yellow index (YI value)] (yellowness of the sheet)

A multilayer sheet was cut into pieces of 50 mm $\times$ 50 mm in size (thickness: as it was); each test piece was analyzed by using a spectrophotometer (SE-2000, manufactured by Nippon Denshoku Public Limited Company) by the transmission method specified in ASTM D1925; the observed values were averaged to give a YI value. The light source used in the measurement was the C light source at a view angle of two degrees in the CIE light source.

The multiple test pieces were cut off from different positions of the multilayer sheet, similarly to the test piece for the distinctness of image.

[Initial electrostatic potential and electrostatic half-life]

A multilayer sheet was cut into pieces of 45 mm $\times$ 45 mm in size (thickness: as it was); the electrostatic half-life of each test piece was determined, after conditioning under an environment at 23°C and 50% RH for 24 hours, by using a Static Honest Meter (TIPE S-5109, manufactured by Shishido Electrostatic, Ltd.) under an environment at 23°C and 50% RH according to the method A specified in JIS L1094 (1988); and the observed values were averaged to give an electrostatic half-life. Then, a particular voltage (10 kV) was applied to each test piece; the electrostatic potential thereof 30 seconds after application was determined; and the observed values were averaged to give an initial electrostatic potential. "Electrostatic half-life" means a time when the initial electrostatic potential damps to half values afterhaving stopped an applied voltage. The multiple test pieces were cut off from different positions of the multilayer sheet, similarly to the test piece for the distinctness of image. Each test piece after cut off was ultrasonicated as immersed in ion-exchange water at 60°C for 10 minutes in an ultrasonic cleaning machine, washed thoroughly with ion-exchange water, and dried in an oven at 60°C for 1 hour, before the conditioning above. When the test piece was immersed in hot water, the test piece was placed under a previously degreased metal jig with its terminal pressed downward for prevention from floating.

[Surface resistivity]

A multilayer sheet was cut into pieces of 100 $\times$ 100 mm in size (thickness: as it was). Then, after cleaning and drying of the test piece and conditioning of the test piece under an environment at 23°C, 50% RH for 24 hours, similarly to the measurement of electrostatic half-life, a voltage of 500kV is applied to the sample, the surface resistance of each test piece was determined one minute after the voltage impression, by using a resistivity measuring device (TR-8601, manufactured by Takeda Riken Kogyo Co., Ltd.) under an environment at 23°C and 50% RH according to the method specified in JIS K6911 (1995); and the observed values were averaged to give obtained electric resistance value (ammeter observed value), which is then multiplied by a coefficient of 18.8, to give a surface resistivity.

The measurement was carried out in a container for measurement of insulation resistance (TR42, manufactured by Takeda Riken Kogyo Co., Ltd.), and the electrode used for measurement was an electrode having an internal circle diameter of the surface electrode of 50 mm and an internal diameter of the surface cyclic electrode of 70 mm.

The multiple test pieces were cut off from different positions of the multilayer sheet, similarly to the test piece for the image visibility.

[Thickness of multilayer sheet]

The thickness of a multilayer sheet was determined at points distributed at an interval of 50 mm in the width direction from a base point at the position 30 mm inward from one terminal of a multilayer sheet selected at random, by using a digital micrometer manufactured by Mitsutoyo Corp.; and the measured thickness values were averaged to give a thickness in the present description.

The multiple test pieces are cut off by selecting at random, in the multilayer sheet, a first base point at the position 30 mm inward from one terminal in the width direction toward the other terminal, another base point at the position 50 mm toward the other terminal from the first group point, and so on (however, the final base point is located at a position 30 mm or more inward from the other terminal), and the thickness of the multilayer sheet at various points including the first base point was determined, by using a digital micrometer manufactured by Mitsutoyo Corp.; and the observed values were averaged to give the thickness of the multilayer sheet.

[Resin melt viscosity]

The melt viscosity in the present description was a value determined by using a capillograph type ID manufactured by Toyo Seiki Seisaku-sho, Ltd. Specifically in measurement, a capillary having a hole diameter of 1.0 mm and a length of 10 mm was connected to the terminal of a cylinder having an internal diameter of 9.55 mm (effective length: 250 mm), and a test sample (resin pellet) was filled in the cylinder, while the cylinder and the capillary were heated to 230˚C (260˚C when a polycarbonate resin was used). After filling, a piston was introduced into the cylinder, and the resin was molten by preheating for four minutes. The piston was pushed down temporarily during preheating, for removal of air bubbles in the test sample in the molten state. In addition, the loading rate of the test sample is an amount sufficient to make the test sample 15 cc or more in volume after removal of air bubble. After completion of preheating, the test sample in the cylinder was extruded with the piston at a shear rate in the capillary area of 100 s$^{-1}$, and the melt viscosity then was determined. The melt viscosity was measured, after the extrusion load was stabilized.

[Ash test]

The antistatic effect of the multilayer sheet according to the present invention was evaluated in the following ash test.

A multilayer sheet was cut into pieces of 45 mm $\times$ 45 mm in size (thickness: as it was), and the test pieces were conditioned in an environment at 23˚C and 50% RH for 24 hours. The multiple test pieces were cut off from different positions of the multilayer sheet, similarly to the test piece for the distinctness of image. Each test piece after cut off was ultrasonicated, similarly to the measurement of electrostatic half-life. After conditioning, in a manner similar to the method of applying voltage in measurement of the electrostatic half-life, a voltage of 10 kV was applied to the test piece for 30 seconds for electrification of the test piece by using Static Honest Meter (TIPE S-5109, manufactured by Shishido Electrostatic, Ltd.) under an environment at 23˚C and 50% RH.

Five minutes after completion of application, the test piece was brought closer to ash uniformly spread on wood-free paper at a particular gap and held at the position for 60 seconds, for observation of migration of the ash to the test piece. The ash used was finely divided tobacco ash. The evaluation criteria for the antistatic performance are shown below.

◎: No deposition of ash on the test piece when the distance between the test piece and the ash was 6 mm

○: Some deposition of ash on the test piece when the distance between the test piece and the ash was 6 mm, but no deposition when the distance between the test piece when the distance between the test piece and the ash was 8 mm

✕: Much deposition of ash on the test piece when the distance between the test piece and the ash was 8 mm

EXAMPLES

Hereinafter, the present invention will be described in more detail with reference to Examples, but it should be understood that the present invention is not restricted by these Examples at all.

The instruments used in Examples and Comparative Examples are as follows:

The extruder used for forming the antistatic layer C in the first embodiment or the core layer in the second embodiment was a vented single-screw extruder having an internal diameter of 65 mm; that used for forming the antistatic layer M in the second embodiment was a single-screw extruder having an internal diameter of 30 mm; and that for forming the coat layer was a single-screw extruder having an internal diameter of 20 mm. The molding/withdrawing machine used had triple polishing rolls of hard chrome-plated mirror-surfaced smooth-surfaced metal rolls having a roll diameter of 195 mm. The maximum temperature of each resin or resin composition in each extruder was adjusted not to become higher than the resin temperature measured at a breaker plate plus 25˚C shown in Table 3. The extrusion rate from the kneading extruder having an internal diameter of 65 mm was adjusted with a gear pump connected to the extruder outlet.

In the first method for lamination of the layers, a multi-manifold lamination T die having a lip width (W) of 500 mm (T die lip gap (h) and lip-unit parallel land length (t) in each Example are shown in Tables 3 and 4) was connected to the gear pump outlet ("65 mm extruder") and the extruder outlet ("20mm extruder" or/and " 30mm extruder"), and the resins were coextruded at an extrusion rate of 60 kg/hr and at the shear amount in the parallel land area shown in Tables 3 and 4. The withdrawing rate was adjusted according to the thickness of the desirable product. The temperature of the rolls was adjusted separately, by using three temperature-controlling oil pumps. The rolls are positioned in the configuration shown in FIG. 3. Columns 1, 2 and 3 in the row of roll temperature represent in Tables 3 and 4 respectively mean the polishing rolls 7, 8 and 9 shown in FIG. 3. The roll temperature was the temperature of the oil used for temperature control of the roll.

The resin temperature of the core layer or antistatic layer C in Tables 3 and 4 is the temperature of the center of the breaker plate installed at the gear pump outlet, and the resin temperature of the antistatic layer M or coat layer was the temperature of the center of the breaker plate connected to the extruder outlet.

Lamination was also carried out by using a feed block. In such a case, a feed-block lamination mold was placed between the gear pump and the T die; a T die having a lip width (W) of 550 mm was connected to the feed-block outlet (lip gap (h) and lip-unit parallel land length (t) of each T die shown in Tables 3 and 4); and the resins were coextrude at an extrusion rate of 60 kg/hr and at the shear amount in the parallel land area shown in Tables 3 and 4. The other preparative method is the same as that by using a multi-manifold T die.

The transparent resins and the antistatic agents used in Examples and Comparative Examples and the physical properties thereof are shown in Tables 1 and 2. The configuration of the multilayer sheets and the manufacturing condition are shown in Tables 3 and 4, and the physical properties and the evaluation results of the multilayer sheets obtained, in Table 5.

TABLE 1 transparent resins

| Abbr. | Product name | Manufacturer | Trade name | Grade | Density at 23°C (g/cm³) | Refractive index | Total light transmittance (%) | Haze (%) | Molt viscosity (Pa·s) |
|---|---|---|---|---|---|---|---|---|---|
| T1 | Polymethyl methacrylate | Mitsubishi Rayon Co., Ltd. | Acrypet | VH5-000 | 1.19 | 1.49 | 92 | 1.0 | 1800 |
| T2 | Ultraviolet absorbent-containing polymethyl methacrylate | Mistubishi Rayon Co.,Ltd. | Acrypet | VH5-001 | 1.19 | 1.49 | 92 | 1.0 | 1800 |
| T3 | Methylmetacrylate-styrene copolymer | Nippon Steel Chemical Co., Ltd. | Estyrene | MS 600 | 1.13 | 1.53 | 90 | 2.0 | 1200 |
| T4 | Methylmetacrylate-styrene copolymer | Dainippon Ink and Chemicals, Inc. | Cleapact | TS-50 | 1.10 | 1.54 | 91 | 1.0 | 920 |
| T5 | Methacrylate-sytrene-butylene copolymer | Dainippon Ink and Chemicals, Inc. | Cleapact | TI-300 | 1.10 | 1.54 | 91 | 3.0 | 776 |
| T6 | Polycarbonate | Mistubishi Engineering Plastics Corp. | Iupilon | H-4000 | 1.20 | 1.59 | 90 | 1.0 | 1720 |
| T7 | Polystyrene | PS Japan Corp. | PSJ-polystyrene | HH105 | 1.05 | 1.59 | 90 | 2.0 | 840 |

(Remarks : The melt viscosity of the resins about except T6 above was determined at 230 °C and that of at 260°C)

TABLE 2 Polymeric antistatic agents

| Abbr. | Manufacturer | Trade name | Grade | Refractive index | Melt viscosity (Pa·s) | Surface resistivity (Ω) |
|---|---|---|---|---|---|---|
| E1 | Sanyo Chemical Industries Ltd. | Pelestat | VH 230 | 1.50 | 96 | $5 \times 10^7$ |
| E2 | Sanyo Chemical Industries Ltd. | Pelestat | NC 7530 | 1.53 | 440 | $2 \times 10^9$ |
| (Remarks : Surface resistivity: manufacturer's value) | | | | | | |

Example 1

An acrylic resin ("VH5-000", manufactured by Mitsubishi Rayon Co., Ltd.) for use as the transparent resin for core layer, an acrylic resin containing an ultraviolet absorbent ("VH5-001", manufactured by Mitsubishi Rayon Co., Ltd.) for use as the transparent resin for forming an antistatic layer M and a coat layer, and a polyether-based polymeric antistatic agent (VH230) manufactured by Sanyo Chemical Industries Co., Ltd. that has a refractive index different by 0.01 from that of VH5-001 for use as the polymeric antistatic agent were coextruded from a multi-manifold T die under the condition and in the layer structure shown in Table 3 at a withdrawing rate of 1.14 m/minute, to give a multilayer sheet having a thickness of 1.6 mm in the five-layered structure. The basis weight ratio of each layer was controlled by the extrusion rate ratio. The transparent resin blending rate and the antistatic agent blending rate in antistatic layer M in Table 3 are respectively the weight ratios of respective components with respect to 100% of the sum thereof. For prevention of color development by the antistatic agent, a bluing agent was added in an amount of 0.025 wt parts, with respect to 100 wt parts of the sum of the transparent resin and the antistatic agent in the antistatic layer M. There was completely no contamination of the roll surface by deposition, even after continuous extrusion for 12 hours, allowing reliable production of the multilayer sheet (Table 3). Control of the shear amount in the parallel land area to a small value of 23 gave a multilayer sheet without scaly pattern generated that is favorable in appearance and superior in distinctness of image. Because the thickness of the coat layers coating the antistatic layer M was sufficiently thin (small basis weight), the multilayer sheet has a lower initial electrostatic potential and a short electrostatic half-life of 20 seconds or less, and was very superior in antistatic property. Further because the antistatic layer M was thin and additionally, the bluing agent was added, the YI value was also very small. The results are shown in Table 5.

Example 2

A multilayer sheet was prepared in a similar manner to Example 1 under the condition shown in Table 3, except that the shape of the parallel land area (lip gap, lip unit parallel land length) was changed as shown in Table 3 and the resins were molded at a shear amount in the parallel land area of 132. As a result, the multilayer sheet obtained showed some scaly pattern because of the increase in shear amount and some deterioration in distinctness of image, compared to Example 1, but they are still in allowable ranges. The results are shown in Table 5.

Example 3

A methyl methacrylate-styrene copolymer ("MS600", manufactured by Nippon Steel Chemical Co., Ltd.) for use as the transparent resin for the core layer, antistatic layer M and coat layer and a polyether ester amide-based polymeric antistatic agent (NC7530 prepared by Sanyo Chemical Industries Co., Ltd.) that has a refractive index no different from that of MS600 for use as the polymeric antistatic agent were coextruded by a feed-block lamination method under the condition and in the layer structure shown in Table 3 at a withdrawing rate of 1.00 m/minute, to give a multilayer sheet having a thickness of 1.7 mm in the five-layered structure. There was completely no contamination of the roll surface by deposition, even after continuous extrusion for 12 hours, allowing reliable production of the multilayer sheet (Table 3). Control of the shear amount in the parallel land area to a small value of 15 gave a multilayer sheet with some scaly pattern generated, but the appearance and the distinctness of image were in allowable ranges. Because the thickness of the coat layers coating the antistatic layer M was sufficiently thin (small basis weight), the multilayer sheet has a lower initial electrostatic potential and a short electrostatic half-life of 60 seconds or less, and was very superior in antistatic property. Further because the antistatic layer M was thin, the YI value was also very small. As shown in Table 5, the distinctness of image was unsatisfactory compared to Example 1, although the shear amount was sufficiently low at 15, possibly because of the difference of the transparent resin. The results indicate that use of a polymethyl methacrylate as the transparent resin is more effective than use of a methyl methacrylate-styrene copolymer in giving favorable results. The results are shown in Table 5.

Example 4

A polycarbonate resin ("H-4000" manufactured by Mitsubishi Engineering Plastics Corp.) for use as the transparent resin for core layer, VH5-001 used in Example 1 for use as the transparent resin for antistatic layer M and coat layer, and VH230 used in Example 1 for use as the polymeric antistatic agent were coextruded by a feed-block lamination method under the condition and in the layer structure shown in Table 3 at a withdrawing rate of 0.94 m/min, to give a multilayer sheet having a thickness of 1.7 mm in the five-layered structure. There was completely no contamination of the roll surface by deposition, even after continuous extrusion for 12 hours, allowing reliable production of the multilayer sheet (Table 3). Control of the shear amount in the parallel land area to a small value of 3 gave a multilayer sheet with some scaly pattern, but the distinctness image was within an allowable range. Because the thickness of the coat layers coating the antistatic layer M was sufficiently thin (small basis weight), the multilayer sheet has a lower initial electrostatic potential and a short electrostatic half-life of 60 seconds or less, and was very superior in antistatic property. The low distinctness of image compared to Example 1 is because of the difference of the transparent resin used for the core layer. The results indicate that use of polymethyl methacrylate for the core layer resin is more effective than use of a polycarbonate resin in giving favorable results. The results are shown in Table 5.

Example 5

A multilayer sheet having a thickness of 1.6 mm in the 5-layered structure was prepared in a similar manner to Example 1, except that the basis weight of coat layer was changed to 15 g/m$^2$ and the basis weight of antistatic layer M to 75 g/m$^2$, and no bluing agent was added. There was completely no contamination of the roll surface by deposition, even after continuous extrusion for 12 hours, allowing reliable production of the multilayer sheet (Table 3). The multilayer sheet had an electrostatic half-life significantly elongated, compared to Example 1, by increase in the basis weight (thickness) of the coat layer and decrease in the basis weight (thickness) of the antistatic layer M, but the initial electrostatic potential thereof was low and the antistatic performance was in an allowable range. The results are shown in Table 5.

Example 6

A multilayer sheet having a thickness of 1.6 mm was prepared in a similar manner to Example 1, except that the blending rate of the polymeric antistatic agent in the antistatic layer M was changed to 25 wt% and the basis weight of coat layer to 9 g/m$^2$, and no bluing agent was added to the antistatic agent M. There was completely no contamination of the roll surface by deposition, even after continuous extrusion for 12 hours, allowing reliable production of the multilayer sheet (Table 3). Although the shear amount in the parallel land area was controlled to a small value of 23 as in Example 1, because the addition amount of the antistatic agent was larger than in Example 1, the multilayer sheet had a slightly observable scaly pattern and slightly lowered distinctness of image, but both of them were in allowable ranges. Because the addition amount of the antistatic agent was increased more than in Example 1 and the thickness of the coat layer made larger (larger basis weight), the multilayer sheet has an electrostatic half-life longer than that of Example 1. However, the initial electrostatic potential was low, and the antistatic effect was favorable. The results are shown in Table 5.

Example 7

A mixture of a methyl methacrylate-styrene copolymer ("Cleapact TS-50", manufactured by Dainippon Ink and Chemicals, Inc.) and a methyl methacrylate-styrene-butylene copolymer ("Cleapact TI-300", manufactured by Dainippon Ink and Chemicals, Inc.) at a weight ratio of 60:40 was used as the transparent resin for core layer and antistatic layer M. The melt viscosity of the mixture was 810 Pa·s. On the other hand, only Cleapact TS-50 used for core layer for use as the transparent resin for coat layer, and NC7530 used in Example 3 having a refractive index different by 0.01 from that of Cleapact TS-50 and Cleapact TI-300 for use as the polymeric antistatic agents were coextruded in a similar manner to Example 3 by a feed-block lamination method under the condition and in the layer structure shown in Table 3, to give a multilayer sheet having a thickness of 1.7 mm in the five-layered structure. There was completely no contamination of the roll surface by deposition, even after continuous extrusion for 12 hours, allowing reliable production of the multilayer sheet (Table 3). Although the shear amount in the parallel land area was controlled to a small value of 3, the multilayer sheet obtained had some scaly pattern generated. It is because of the influence of the transparent resins used in respective layers. It is because the transparent resin used in each layer of Example 7 had a styrene component content higher and a methyl methacrylate component amount lower than that of the transparent resin used in each layer of Example 3, indicating that use of an acrylic resin lower in styrene component content as the transparent resin is preferable for reduction of scaly pattern. The multilayer sheet had some scaly pattern generated, but the appearance and the distinctness of image were both in allowable ranges. The results are shown in Table 5.

Example 8

The coat layers constituted of VH5-001 as a base resin were coextruded on both faces of the antistatic layer C constituted of VH5-001 and VH230 having a refractive index different by 0.01 from that of VH5-001 by a feed-block lamination method under the condition and in the layer structure shown in Table 3, to give a multilayer sheet having a thickness of 1.6 mm in the three-layer structure. Because increase in YI value was expected as the antistatic layer C is thick, a bluing agent was added to the antistatic layer C in an amount of 0.025 wt parts with respect to 100 wt parts of the resin for forming the antistatic layer C. There was completely no contamination of the roll surface by deposition, even after continuous extrusion for 12 hours, allowing reliable production of the multilayer sheet (Table 3). Control of the shear amount in the parallel land area to a small value of 23 gave a multilayer sheet without scaly pattern generated that is favorable in appearance and superior in distinctness of image. Because the thickness of the coat layers coating the antistatic layer C was sufficiently thin (sufficiently small basis weight), the multilayer sheet has a lower initial electrostatic potential and a short electrostatic half-life of 60 seconds or less, and was very superior in antistatic property. The multilayer sheet of Example 8, in which the thickness of the antistatic layer C is larger than that of the antistatic layer M of Example 1 (larger basis weight), was slightly lower in distinctness of image than the multilayer sheet of Example 1. Increase in thickness of the antistatic layer, which demands addition of a great amount of the antistatic agent, is slightly disadvantageous from the point of raw material cost. The results are shown in Table 5.

Example 9

A multilayer sheet having a thickness of 0.6 mm under the condition shown in Table 3 was prepared in a similar manner to Example 1, except that the resins were molded at a withdrawing rate of 3.11 m/minute. There was completely no contamination of the roll surface by deposition, even after continuous extrusion for 12 hours, allowing reliable production of the multilayer sheet (Table 3). The multilayer sheet obtained showed favorable properties, similarly to Example 1. The results are shown in Table 5.

Then, the sheet obtained was thermoformed in a one-shot molding machine into a tray having a length of 250 mm, a width of 360 mm, and a depth of 45 mm. The tray can be used as a packaging material that transparency and antistatic property is demanded.

Example 10

A multilayer sheet having a thickness of 1.7 mm was prepared in a similar manner to Example 3, except that NC7530, the antistatic agent used in Example 3, was added to the core layer (1 wt% with respect to the sum of MS600 and NC7530) and the shear amount in the parallel land area was reduced to 11. There was completely no contamination of the roll surface by deposition, even after continuous extrusion for 12 hours, allowing reliable production of the multilayer sheet (Table 3). Because the shear amount in the parallel land area was lower than in Example 3, the multilayer sheet obtained had a distinctness of image slightly improved from that in Example 3, but also had a YI value increased from that in Example 3, because of addition of the antistatic agent to the core layer. However, these values were still in allowable ranges. The results are shown in Table 5. It was possible to obtain a multilayer sheet almost similar to that in Example 3, even when NC7530 was added to the core layer in a small amount, and thus, if the transparent resins in respective layers are the same as each other, it is possible to recycle the edge and other wastes of the multilayer sheet as part of the core layer.

Example 11

A multilayer sheet was prepared in a similar manner to Example 1 under the condition shown in Table 3, except that a dye for smoke color was added in an amount of 0.018 wt parts with respect to 100 wt parts of the core layer resin. The multilayer sheet obtained was a smoke colored sheet by addition of the colorant, which was lower in total light transmittance but favorable in distinctness of image. There was observed increase in the YI value from the value in Example 1, but it is caused by the dye. The results are shown in Table 5.

Example 12

A multilayer sheet having a thickness 1.7 mm in the five-layered structure was coextruded by a feed-block lamination method in a similar manner to Example 3, except that a polystyrene ("PSJ-polystyrene HH105", manufactured by PS Japan Corporation) was used as the transparent resin for use as the core layer. There was completely no contamination of the roll surface by deposition, even after continuous extrusion for 12 hours, allowing reliable production of the multilayer sheet (Table 3). The multilayer sheet obtained showed some scaly pattern generated, but the image visibility was in an allowable range. Because the thickness of the coat layers coating the antistatic layer M was sufficiently small (small basis weight), the sheet had a low initial electrostatic potential and an electrostatic half-life of 60 second or less, and was superior in antistatic property. The distinctness of image visibility lower than that of Example 3 was due to the difference of the transparent resin used for the core layer, indicating that use of a methyl methacrylate-styrene copolymer was more effective than use of a polystyrene resin in giving favorable results. The results are shown in Table 5.

Comparative Example 1

A multilayer sheet in the three-layer structure (antistatic layer M/ core layer/antistatic layer M) was prepared in a similar manner to Example 1, except that the antistatic layer M was not covered with the coat layer. There was deposition on the roll surface observed immediately after withdrawal by rolls, resulting in deposition on the rolls and prohibiting production of a smooth sheet. Analysis of the physical properties of the sample obtained in a short period of time showed that the multilayer sheet was superior in antistatic property and had a low surface resistivity because of absence of the coat layer, but had an irregular surface and extremely lower distinctness of image.

Comparative Example 2

As shown in Table 3, a multilayer sheet in the five-layered structure was prepared in a similar manner to Example 1, except that the shear amount in the parallel land area was changed to a common value of 201. The sheet obtained had a scaly pattern generated and extremely low distinctness of image.

Comparative Example 3

A multilayer sheet was prepared in a similar manner to Example 1, except that the basis weight of coat layer was increased to 50 $g/m^2$ and the basis weight of core layer, decreased to 1564 $g/m^2$. Because the thickness of the coat layer was too large, the initial electrostatic potential was 3.1 kV, which was unfavorable for antistatic effect.

Comparative Example 4

A multilayer sheet was prepared in a similar manner to Example 1, except that the blending rate of the polymeric antistatic agent in the antistatic layer M was changed from 20 wt% to 3 wt% and no bluing agent was added. Because the amount of the polymeric antistatic agent added was too low, the initial electrostatic potential was 3.1 kV, which was unfavorable for antistatic effect.

Comparative Example 5

A multilayer sheet was prepared under the condition and in the configuration shown in Table 4 in a similar manner to Example 1, except that polystyrene ("PSJ-polystyrene HH105", manufactured by PS Japan Corporation) was used as the transparent resin for the core layer, antistatic layer M, and coat layer, and NC7530 having a difference in refractive index of 0.06 was used as the polymeric antistatic agent for the antistatic layer M. Because the difference in refractive index between the polystyrene and the polymeric antistatic agent of 0.06 was too large, the antistatic layer M became turbid, leading to drastic deterioration in distinctness of image and prohibition of clear transparency.
The configuration of the multilayer sheets and the production conditions in Comparative Examples above are shown in Table 4, and the physical properties of the multilayer sheets obtained and the evaluation results, in Table 5.

TABLE 3
Multilayer sheet configuration and manufacturing condition

| | Core layer or antistatic layer C | | | Antistatic layer M | | | | Coat layer | | |
|---|---|---|---|---|---|---|---|---|---|---|
| | Transparent resins | Basis weight ($g/m^2$) | Resin temperature (℃) | Transparent resin bleeding rate (wt%) | Antistatic agent rate (wt%) | Basis weight ($g/m^2$) | Resin temperature (℃) | Transparent resins | Basis weight ($g/m^2$) | Resin temperature (℃) |
| Example 1 | T1 | 1656 | 232 | T2 (80%) | E1 (20%) | Front 120 Rear 120 | 234 | T2 | Front 4 Rear 4 | 234 |
| Example 2 | T1 | 1656 | 232 | T2 (80%) | E1 (20%) | Front 120 Rear 120 | 234 | T2 | Front 4 Rear 4 | 234 |
| Example 3 | T3 | 1763 | 227 | T3 (85%) | E2 (15%) | Front 75 Rear 75 | 233 | T3 | Front 4 Rear 4 | 239 |
| Example 4 | T6 | 1792 | 260 | T2 (85%) | E1 (15%) | Front 120 Rear 120 | 234 | T2 | Front 4 Rear 4 | 234 |
| Example 5 | T1 | 1724 | 232 | T2 (80%) | E1 (20%) | Front 75 Rear 75 | 234 | T2 | Front 15 Rear 15 | 235 |
| Example 6 | T1 | 1646 | 232 | T2 (75%) | E1 (25%) | Front 120 Rear 120 | 234 | T2 | Front 9 Rear 9 | 234 |
| Example 7 | T4 + T5 | 1712 | 230 | T4 + T5 (85%) | E2 (15%) | Front 75 Rear 75 | 232 | T4 | Front 4 Rear 4 | 232 |
| Example 8 | T2 + E1 | 1896 | 232 | - | - | - | - | T2 | Front 4 Rear 4 | 234 |
| Example 9 | T1 | 602 | 232 | T2 (80%) | E1 (20%) | Front 52 Rear 52 | 234 | T2 | Front 4 Rear 4 | 234 |
| Example 10 | T3 + E2 | 1763 | 227 | T3 (85%) | E2 (15%) | Front 75 Rear 75 | 233 | T3 | Front 4 Rear 4 | 239 |
| Example 11 | T1 | 1656 | 232 | T2 (80%) | E1 (20%) | Front 120 Rear 120 | 234 | T2 | Front 4 Rear 4 | 234 |
| Example 12 | T7 | 1638 | 221 | T3 (85%) | E2 (15%) | Front 75 Rear 75 | 233 | T3 | Front 4 Rear 4 | 239 |

(Remarks : The mixing ratio of T4 to T5 in the antistatic layer C of Example 7 was 60:40 by weight. The mixing ratio of T2 to E1 in the antistatic layer C of Example 8 was 85:15 by weight. The mixing ratio of T3 to E2 in the antistatic layer C of Example 10 was 99:1 by weight. A bluing agent was added to the antistatic layer M of Example 1,2,9, or 11 in an amount of 0.025 wt. Parts with respect to 100 parts of the total weight of T2 and E1. A bluing agent was added to the antistatic layer C of Example 8 in an amount of 0.025 wt parts with to 100 wt parts of the total weight of T2 and E1. In Example 11, a smoke dye was added to the resin for core layer in an amount of 0.018 wt part with respect to 100 tarts wt parts of the resin)

TABLE 3 (continued)

| | Roll temperature (°C) | | | Lip gap h (mm) | Lip-unit parallel land length t (mm) | Shear amount in parallel land area | Concentration of antistatic agent in multilayer sheet (wt%) | Deposition on roll |
|---|---|---|---|---|---|---|---|---|
| | 1 | 2 | 3 | | | | | |
| Example 1 | 90 | 102 | 125 | 4.0 | 15 | 23 | 2.5 | Non |
| Example 2 | 90 | 102 | 125 | 2.5 | 55 | 132 | 2.5 | Non |
| Example 3 | 65 | 80 | 115 | 4.0 | 10 | 15 | 1.2 | Non |
| Example 4 | 95 | 120 | 130 | 4.0 | 2 | 3 | 1.8 | Non |
| Example 5 | 90 | 102 | 125 | 4.0 | 15 | 23 | 1.6 | Non |
| Example 6 | 90 | 102 | 125 | 4.0 | 15 | 23 | 3.2 | Non |
| Example 7 | 75 | 90 | 96 | 4.0 | 2 | 3 | 1.2 | Non |
| Example 8 | 90 | 102 | 125 | 4.0 | 15 | 23 | 14.9 | Non |
| Example 9 | 90 | 102 | 125 | 4.0 | 15 | 23 | 2.9 | Non |
| Example 10 | 65 | 80 | 115 | 4.0 | 7 | 11 | 2.1 | Non |
| Example 11 | 90 | 102 | 125 | 4.0 | 15 | 23 | 2.5 | Non |
| Example 12 | 65 | 80 | 115 | 4.0 | 10 | 15 | 1.3 | Non |

TABLE 4

Multilayer sheet configuration and production condition

| | Core layer or antistatic layer C | | | Antistatic layer M | | | | Coat layer | | |
|---|---|---|---|---|---|---|---|---|---|---|
| | Transparent resins | Basis weight (g/m²) | Resin temperature (℃) | Transparent resin blending rate (wt%) | Antistatic agent blending rate (wt%) | Basis weight (g/m²) | Resin temperature (℃) | Transparent resins | Basis weight (g/m²) | Resin temperature (℃) |
| Comparative example 1 | T1 | 1664 | 232 | T2 (80%) | E1 (20%) | Front 120 Rear 120 | 234 | — | — | — |
| Comparative example 2 | T1 | 1656 | 232 | T2 (80%) | E1 (20%) | Front 120 Rear 120 | 234 | T2 | Front 4 Rear 4 | 234 |
| Comparative example 3 | T1 | 1564 | 232 | T2 (80%) | E1 (20%) | Front 120 Rear 120 | 238 | T2 | Front 50 Rear 50 | 245 |
| Comparative example 4 | T1 | 1656 | 232 | T2 (97%) | E1 (3%) | Front 120 Rear 120 | 239 | T2 | Front 4 Rear 4 | 234 |
| Comparative example 5 | T7 | 1627 | 221 | T7 (85%) | E2 (15%) | Front 75 Rear 75 | 220 | T7 | Front 4 Rear 4 | 225 |

(Remarks : A bluing agent was added to the antistatic layer M of comparative example 1、2、3 in amount of 0.025 wt parts with respect to 100 wt parts of the total weight of T2 and E1.)

TABLE 4 (continued)

| | Roll temperature (℃) | | | Lip gap h (mm) | Lip-unit pararell land length t (mm) | Shear amount in the pararell land area | Concetration of antistatic agent in multilayer sheet (wt%) | Deposition on roll |
|---|---|---|---|---|---|---|---|---|
| | 1 | 2 | 3 | | | | | |
| Comparative example 1 | 90 | 102 | 125 | 4.0 | 15 | 23 | 2.5 | yes |
| Comparative example 2 | 90 | 102 | 125 | 2.0 | 67 | 201 | 2.5 | Non |
| Comparative example 3 | 90 | 102 | 125 | 4.0 | 15 | 23 | 2.5 | Non |
| Comparative example 4 | 90 | 102 | 125 | 4.0 | 15 | 23 | 0.4 | Non |
| Comparative example 5 | 60 | 80 | 105 | 4.0 | 15 | 23 | 1.3 | Non |

EP 1 967 359 A2

Table 5
Physical properties of multilayer sheet and evaluation results

| | Total thickness (mm) | Total basis weight (g/m²) | Total light transmittance (%) | Distinctness of Image (%) | Initial electrostatic potential (kV) | Electrostatic half-life (sec) | Surface resistivity (Ω) | Y I value | Ash test evaluation |
|---|---|---|---|---|---|---|---|---|---|
| Example 1 | 1.6 | 1904 | 92 | 94 | 2.0 | 19 | $10^{15}$ | 0.8 | ◎ |
| Example 2 | 1.6 | 1904 | 92 | 72 | 2.0 | 19 | $10^{15}$ | 0.8 | ◎ |
| Example 3 | 1.7 | 1921 | 91 | 70 | 2.1 | 50 | $10^{15}$ | 2.2 | ○ |
| Example 4 | 1.7 | 2040 | 90 | 90 | 2.1 | 55 | $10^{15}$ | 2.2 | ○ |
| Example 5 | 1.6 | 1904 | 92 | 94 | 2.3 | 60 over | $10^{15}$ | 1.0 | ○ |
| Example 6 | 1.6 | 1904 | 92 | 92 | 2.1 | 60 over | $10^{15}$ | 2.1 | ○ |
| Example 7 | 1.7 | 1870 | 91 | 68 | 2.1 | 50 | $10^{15}$ | 2.5 | ○ |
| Example 8 | 1.6 | 1904 | 90 | 83 | 2.1 | 30 | $10^{15}$ | 5.2 | ○ |
| Example 9 | 0.6 | 714 | 92 | 94 | 1.5 | 30 | $10^{13}$ | 0.3 | ○ |
| Example 10 | 1.7 | 1921 | 89 | 73 | 2.0 | 48 | $10^{15}$ | 4.5 | ○ |
| Example 11 | 1.6 | 1904 | 39 | 94 | 2.1 | 17 | $10^{14}$ | 2.4 | ◎ |
| Example 12 | 1.7 | 1796 | 89 | 62 | 2.1 | 50 | $10^{15}$ | 2.0 | ○ |

TABLE 5 (continued-1)

| | Total thickness (mm) | Total basis weight (g/m$^2$) | Total light transmittance (%) | Distinctness of Image (%) | Initial electrostatic potential (kV) | Electrostatic half-life (sec) | Surface resistivity ($\Omega$) | Y I value | Ash test evaluation |
|---|---|---|---|---|---|---|---|---|---|
| Comparative example 1 | 1.6 | 1904 | 92 | 40 | 2.0 | 1 | $10^{12}$ | 0.8 | ◎ |
| Comparative example 2 | 1.6 | 1904 | 92 | 45 | 2.0 | 19 | $10^{15}$ | 0.8 | ◎ |
| Comparative example 3 | 1.6 | 1904 | 92 | 94 | 3.1 | 60 over | $10^{16}$ | 0.8 | × |
| Comparative example 4 | 1.6 | 1904 | 92 | 96 | 3.1 | 60 over | $10^{16}$ | 0.5 | × |
| Comparative example 5 | 1.7 | 1785 | 89 | 10 | 2.1 | 60 over | $10^{15}$ | 2.5 | ○ |

TABLE 5 (continued-2)

| | Layer structure of multilayer sheet |
|---|---|
| Example 1 | Acrylic coat layer /A.S. layer / acrylic substrate/ A.S. layer / Acrylic coat layer |
| Example 2 | Acrylic coat layer /A.S layer / acrylic substrate/ A.S layer / Acrylic coat layer |
| Example 3 | MS coat layer/ A.S. layer/ MS substrate/ A.S. layer/ MS coat layer |
| Example 4 | Acrylic coat layer / A.S. layer / PC substrate /A.S. layer / acrylic coat layer |
| Example 5 | Acrylic coat layer/ A.S. layer/ acrylic substrate/ A.S. layer / acrylic coat layer |
| Example 6 | Acrylic coat layer/ A.S. layer/ acrylic substrate/ A.S. layer / acrylic coat layer |
| Example 7 | MS coat layer/ A.S. layer/ MS substrate/ A.S. layer/ MS coat layer |
| Example 8 | Acrylic coat layer/acrylic resin + A.S. agent/ acrylic coat layer |
| Example 9 | Acrylic coat layer/ A.S. layer/ acrylic substrate/ A.S. layer / acrylic coat layer |
| Example 10 | MS coat layer/A.S. layer/MS substrate + A.S. layer/ A.S layer /MS coat layer |
| Example 11 | Acrylic coat layer/A.S. layer/acrylic substrate / A.S layer /acrylic coat layer |
| Example 12 | MS coat layer/A.S. layer/PS substrate/A.S layer / MS coat layer |

TABLE 5 (continued-3)

| | Layer structure of multilayer sheet |
|---|---|
| Comparative example 1 | A.S layer/acrylic substrate/A.S layer |
| Comparative example 2 | Acrylic coat layer/ A.S. layer/ acrylic substrate / A.S. layer/acrylic coat layer |
| Comparative example 3 | Acrylic coat layer/A.S. layer /acrylic substrate/ A.S. layer /acrylic coat layer |
| Comparative example 4 | Acrylic coat layer /A.S layer/ acrylic substrate/ A.S. layer/acrylic coat layer |
| Comparative example 5 | PS coat layer/A.S. layer/ PS substrate/A.S. layer /PS coat layer |

(Remarks : layer structure of multilayer sheet in the table 5,

"MS" represents a methyl methacrylate styrene copolymer;
"PS" represents polystyrene; "PC" represents a polycarbonate;
"A.S. layer" represents an antistatic layer; and
"A.S. agent" represents an antistatic agent.

## Claims

1. An antistatic multilayer sheet, comprising coat layers constituted of a transparent resin A, said coat layers substantively do not contain a polymeric antistatic agent, and at least one antistatic layer constituted of a transparent resin B and a polymeric antistatic agent, wherein the antistatic layer is in contact with the inside of the coat layer and the coat layers are placed on the outermost faces of the multilayer sheet, wherein the multilayer sheet has a distinctness of image of 60% or higher and an initial electrostatic potential in electrostati c half-life measurement of 2.5 kV or lower.

2. The antistatic multilayer sheet according to Claim 1, wherein the electrostatic half-life of the multilayer sheet is 60 seconds or less.

3. The antistatic multilayer sheet according to Claim 1, wherein the electrostatic half-life of the multilayer sheet is 20 seconds or less.

4. The antistatic multilayer sheet according to Claim 1, wherein the antistatic layers are formed on both faces of a core layer constituted of a transparent resin C.

5. The antistatic multilayer sheet according to Claim 4, wherein the amount of the polymeric antistatic agent added to the antistatic layer is 5 to 35 wt% with respect to the total weight of the polymeric antistatic agent and the transparent resin B, and 9 wt% or lower with respect to the total weight of the entire multilayer sheet.

**6.** The antistatic multilayer sheet according to any one of Claims 1 to 5, wherein the transparent resin A, B and/or C is one or two or more kinds of resins selected from acrylic resins, styrenic resins, polycarbonate resins, thermoplastic polyester resins and cyclic olefine resins.

**7.** The antistatic multilayer sheet according to any one of Claims 1 to 5, wherein the transparent resins A, B and C are an acrylic resin.

**8.** The antistatic multilayer sheet according to Claim 7, wherein the acrylic resin is polymethyl methacrylate, methyl methacrylate-styrene-butylene copolymer or methyl methacrylate-styrene copolymer.

**9.** The antistatic multilayer sheet according to Claim 1, wherein the difference in refractive index between the transparent resins constituting respective layers of the multilayer sheet is 0.05 or less.

**10.** The antistatic multilayer sheet according to Claim 1, wherein the difference in refractive index between the polymeric antistatic agent and the base transparent resin is 0.05 or less.

**11.** The antistatic multilayer sheet according to Claim 1, wherein the total light transmittance of the multilayer sheet is 75% or higher.

**12.** The antistatic multilayer sheet according to Claim 1, wherein a colorant is added to any one of the layers constituting the multilayer sheet.

**13.** A method of producing the antistatic multilayer sheet according to Claim 1, comprising coextruding a molten resin composition constituted of a transparent resin, said molten resin composition substantively don't contain a polymeric antistatic agent, and a molten resin composition constituted of a transparent resin and a polymeric antistatic agent while adjusting the shear amount in the die-lip parallel land area, as calculated according to the following Formula, in the range of 0.1 to 170:

$$\text{Shear amount} = \{6 \times \text{Extrusion rate (cm}^3\text{/s)} \times \text{Parallel land area-passing time (s)}\} / \{\text{Parallel land area sectional area (cm}^2\text{)} \times \text{Lip gap (cm)}\}$$

FIG. 1A

FIG. 1B

FIG. 2

Resin flow

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7001682 A
- JP 8080599 A
- JP 2006206894 A
- JP 2006015741 A
- JP 2004190028 A
- JP 2006233204 A

**Non-patent literature cited in the description**

- *JIS K7361,* 1997
- *Method A, JIS K7112,* 1999
- *JIS K7105,* 1981
- *JIS K7136,* 2000